# EUROPEAN PATENT SPECIFICATION

(11) **EP 4 041 664 B1**
(45) Date of publication and mention of the grant of the patent: **26.07.2023**
(21) Application number: 20803254.0
(22) Date of filing: 07.10.2020
(51) Int. Cl.: B65G 47/91, B25J 15/00, B25B 11/00, B25J 15/06, B66C 1/02

(54) **A DEVICE FOR GRIPPING OR GRASPING PRODUCTS**
VORRICHTUNG ZUM GREIFEN ODER ERFASSEN VON PRODUKTEN
DISPOSITIF DE PRÉHENSION OU DE SAISIE DE PRODUITS

(30) Priority: 08.10.2019 IT 201900018278
(43) Date of publication of application: 17.08.2022
(60) Divisional application: 23179061.9
(73) Proprietor: Pulsar S.r.l., 40013 Castel Maggiore (Bologna) (IT)
(72) Inventor: FRANZAROLI, Massimo, 40013 Castel Maggiore (BO) (IT)
(74) Representative: Fanzini, Valeriano
(86) International application number: PCT/IB2020/059412
(87) International publication number: WO 2021/070076

(56) References cited:
- JP-A- 2013 248 695
- US-A1- 2007 280 812
- US-A1- 2010 239 408
- US-A1- 2018 297 200
- US-B1- 9 498 887

## Description

### Application field of the present invention

The present invention relates to a device for gripping or grasping products.

Preferably, said products are in the form of packages, in a preferred manner defined by a corresponding envelope, for example made of a plastic film, or a paper sheet, or other, or made of cardboard which wraps or contains one or more articles.

In particular said articles being articles of the so-called Tissue field and preferably being made of paper material or other material, such as woven fabric or non-woven fabric, and preferentially being in the form of rolls, in particular rolls of toilet paper, of kitchen paper or for another use, i.e., rolls for the treatment of food products, such as rolls of aluminium foil, plastic film, wax paper film, and the like.

Said articles can also be in the form of respective packaging, in particular packs, packets or other containers, in particular for napkins, handkerchiefs, small towels for hands and face, hand towels, bed sheets, and other. Other articles that are treated through the present device for gripping and grasping products, for example, consist in sanitary pads for personal care and corresponding packages or packaging.

### State of the art

Devices for gripping or grasping products are known, which devices comprise supporting means for means for engaging and holding by suctioning the respective product.

According to an already known type of devices for gripping or grasping products, suction cups for engaging the corresponding surface of the product are used, which suction cups, however, do not allow exerting a sufficiently high holding action and, therefore, do not allow achieving a safe and reliable grip.

In other types of devices for gripping and grasping solid pieces, having a high weight, suctioning members are usually used, which firmly engage the upper surface of the product, which therefore turn out to be completely unsuitable when it is desired to grasp products that are, or that have, their respective outer surface that is particularly weak or delicate to be treated. US-A1-2018/297200 discloses a robot device for gripping or grasping packages as defined in the preamble of claim 1.

### Summary of the invention.

By the present invention, it is aimed to propose a novel, alternative solution to the solutions known to date, and in particular it is proposed to obviate one or more of the drawbacks or problems cited above and/or to meet one or more needs cited above, and/or anyhow felt in the art, and in particular derivable from what has been set forth herein above.

Therefore, a device is provided, for gripping or grasping products, said products being in particular in the form of packages, in a preferred manner defined by a corresponding envelope, for example made of a plastic film, or a paper sheet, or other, or made of cardboard, which wraps or contains one or more articles; in particular said articles being articles of the so-called Tissue field and preferably being made of paper material or other material, such as woven fabric or non-woven fabric, and preferentially being in the form of rolls, in particular rolls of toilet paper, of kitchen paper or for another use, or rolls for the treatment of food products, such as rolls of aluminium foil, plastic film, wax paper film, and the like, i.e., said articles being in the form of packaging, in particular packs, packets or other containers, in particular for napkins, handkerchiefs, small towels for hands and face, hand towels, bed sheets, sanitary napkins for personal care; the device comprising supporting means for means for engaging and holding by suctioning the respective product and being characterized in that said means for engaging and holding by suctioning the respective product define a first and a second surfaces for engaging and holding by suctioning the same product, in particular angularly spaced apart, preferably angularly spaced by an angle equal to, or substantially equal to, 90°, and in that at the respective surface (141, 142) for engaging and holding by suctioning the same product, corresponding means (18) are provided for the passage of said suctioning flow. The invention is defined by the claims.

In this manner, it is possible to easily and efficiently grasp the product, in particular without providing excessive stresses to the same product, especially to the peripheral surface of the same product, i.e., to the film, or sheet, of the package wrapping the respective articles, for example to the film, or sheet, which wraps corresponding toilet paper rolls.

### Brief description of the drawings

This and other novel aspects, or specific advantageous implementations, are anyhow set forth in the claims cited below, the technical characteristics of which can be found in the following detailed description, illustrating preferred and advantageous embodiments, which are however to be considered as merely exemplary and non-limiting of the invention; said description being given by reference to the attached drawings, in which:

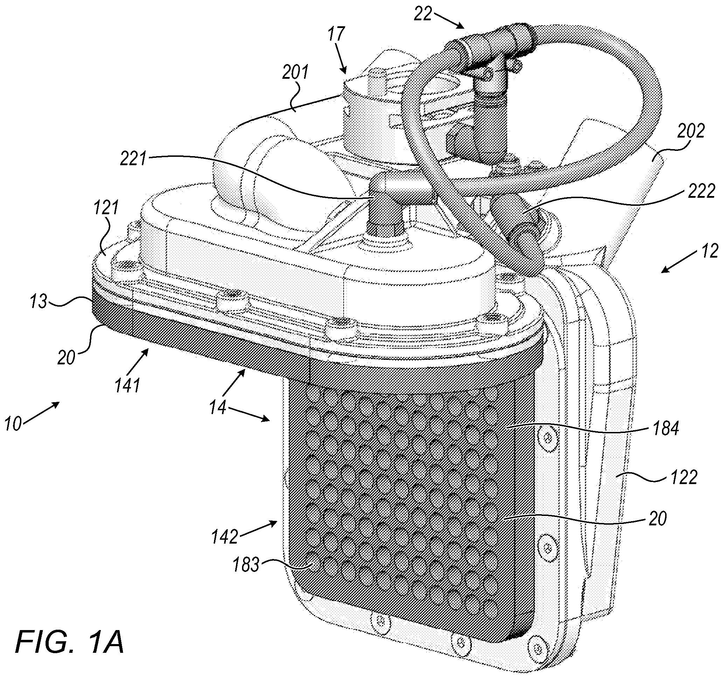

- figure 1A illustrates a perspective, schematic view of a first preferred implementation of device according to the present invention;

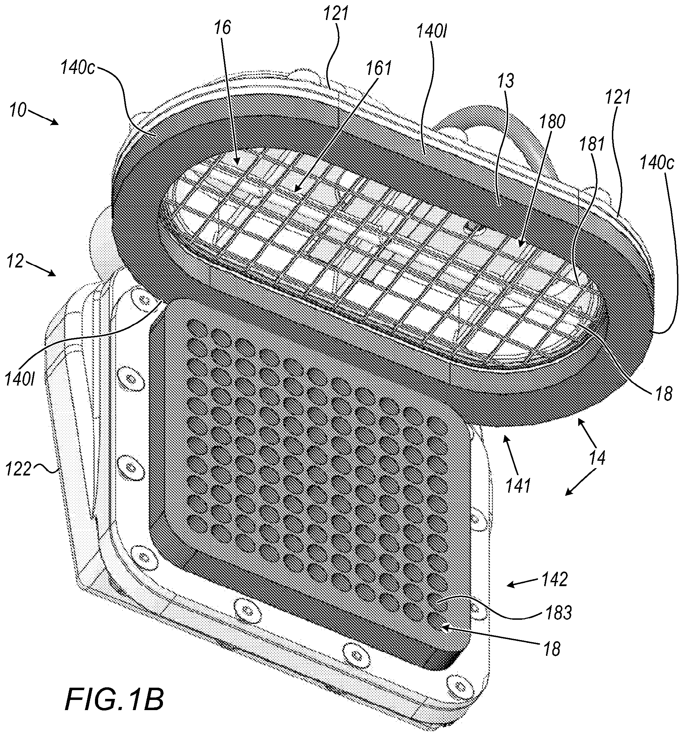

- figure 1B illustrates a perspective, schematic view, taken from a different direction from the one of figure 1A, of the first preferred implementation of device according to the present invention;

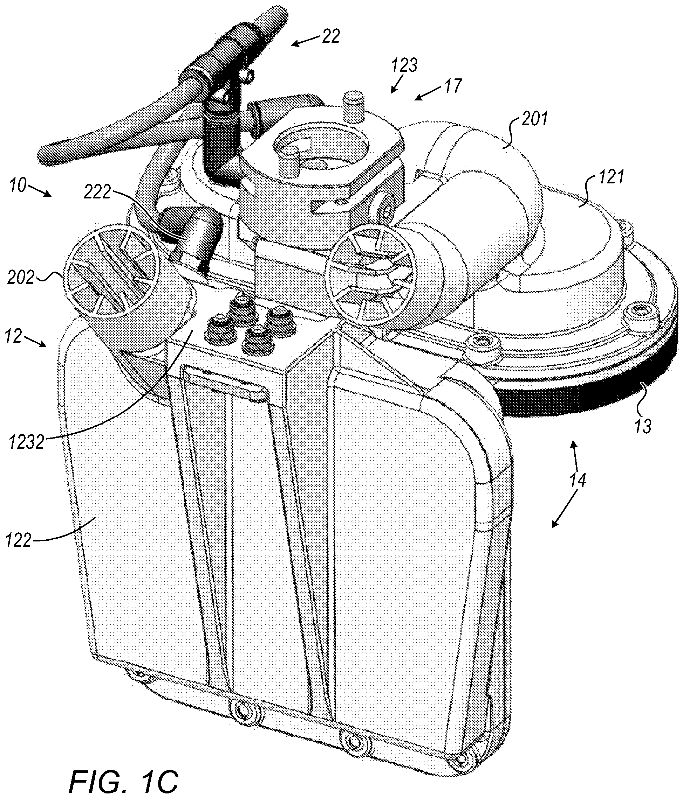

- figure 1C illustrates a perspective, schematic view, taken on the opposite side with respect to the one of figure 1A, of the first preferred implementation of device according to the present invention;

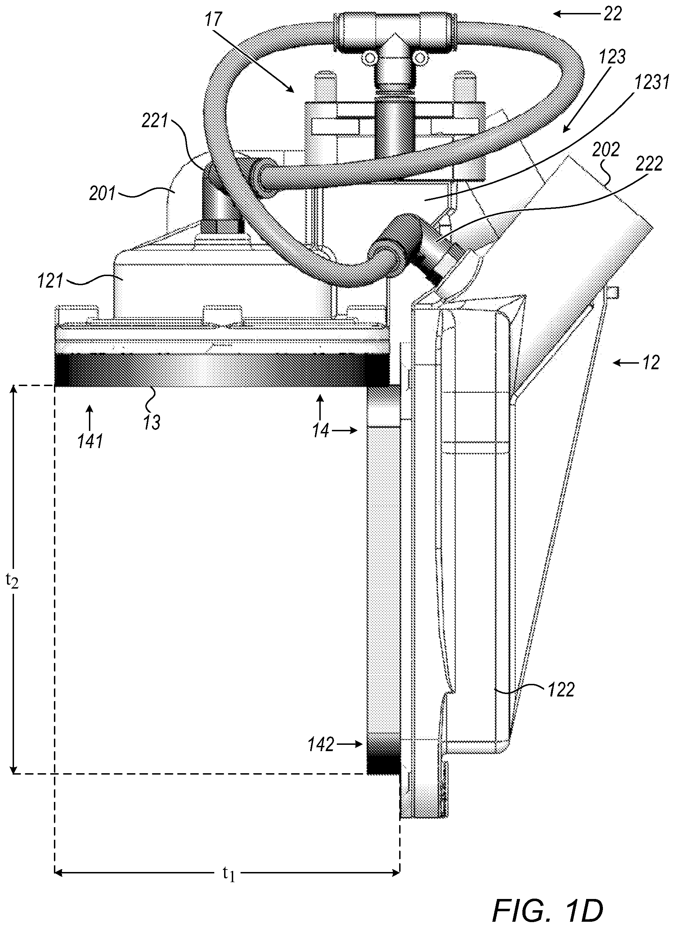

- figure 1D illustrates a side elevational view of the first preferred implementation of device according to the present invention;

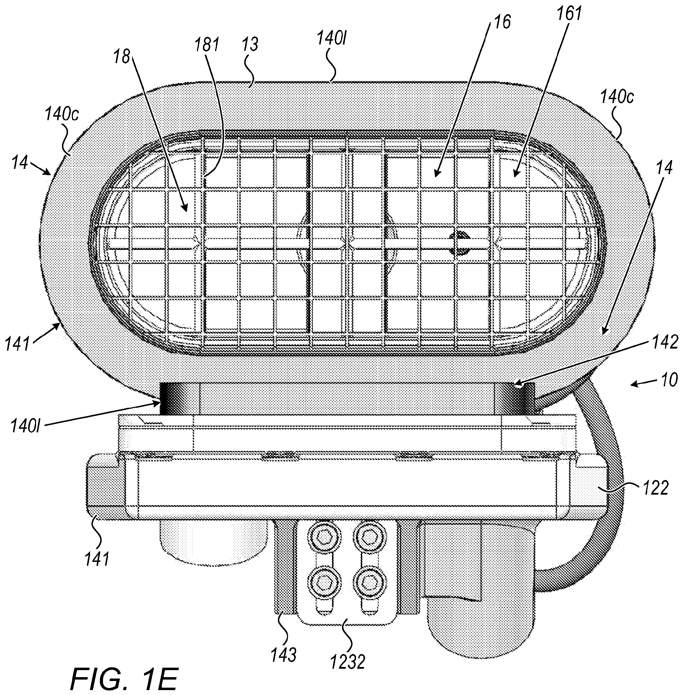

- figure 1E illustrates bottom plan view of the first preferred implementation of device according to the present invention;

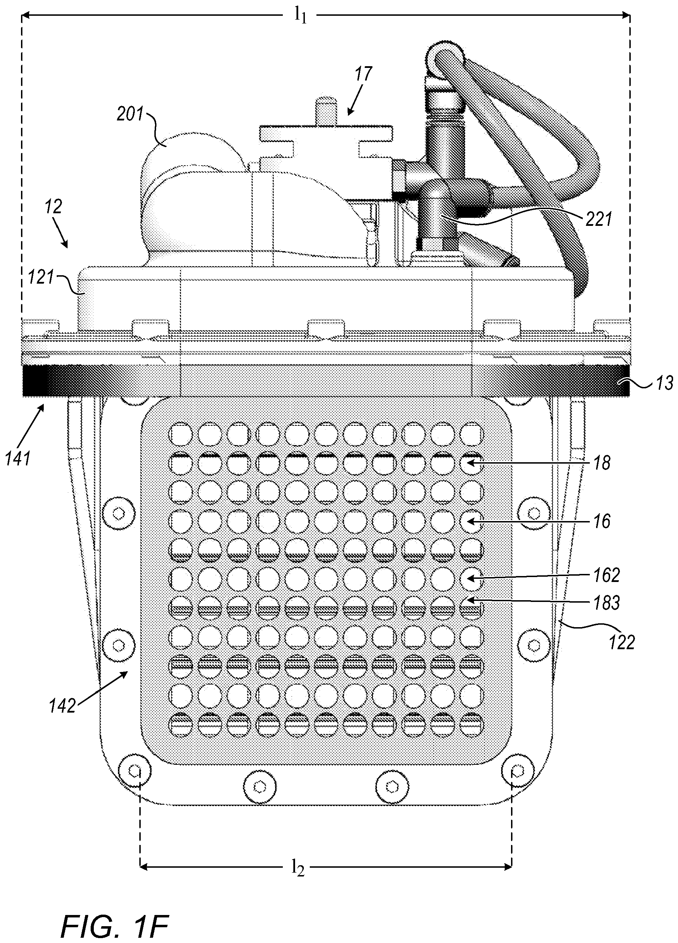

- figure 1F illustrates front elevational view of the first preferred implementation of device according to the present invention;

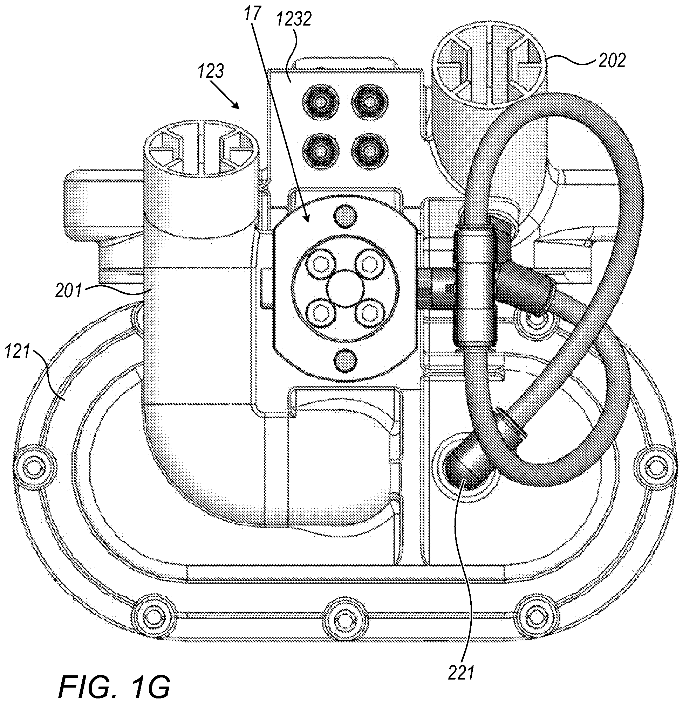

- figure 1G illustrates top plan view of the first preferred implementation of device according to the present invention;

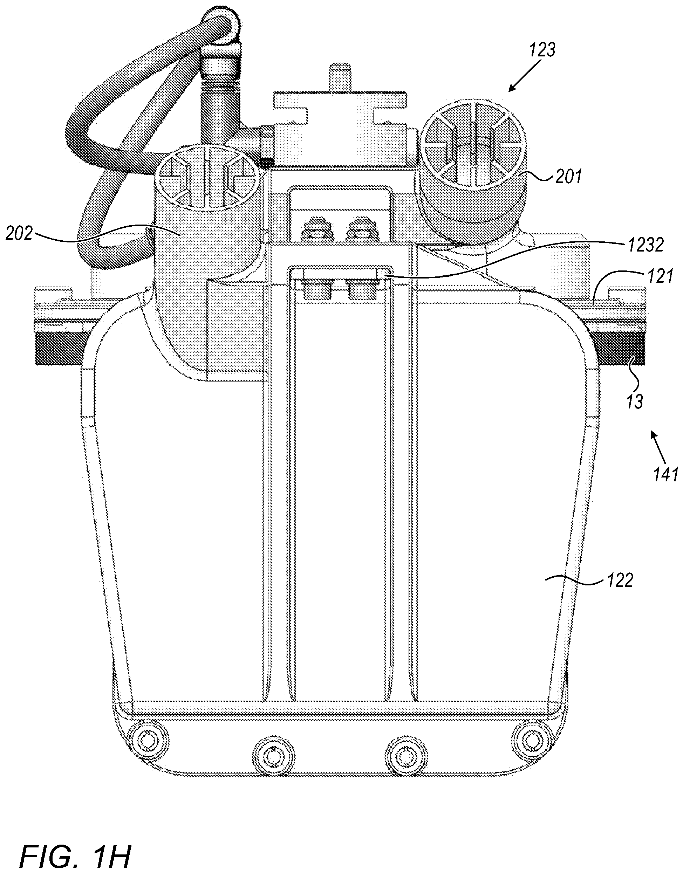

- figure 1H illustrates rear elevational view of the first preferred implementation of device according to the present invention;

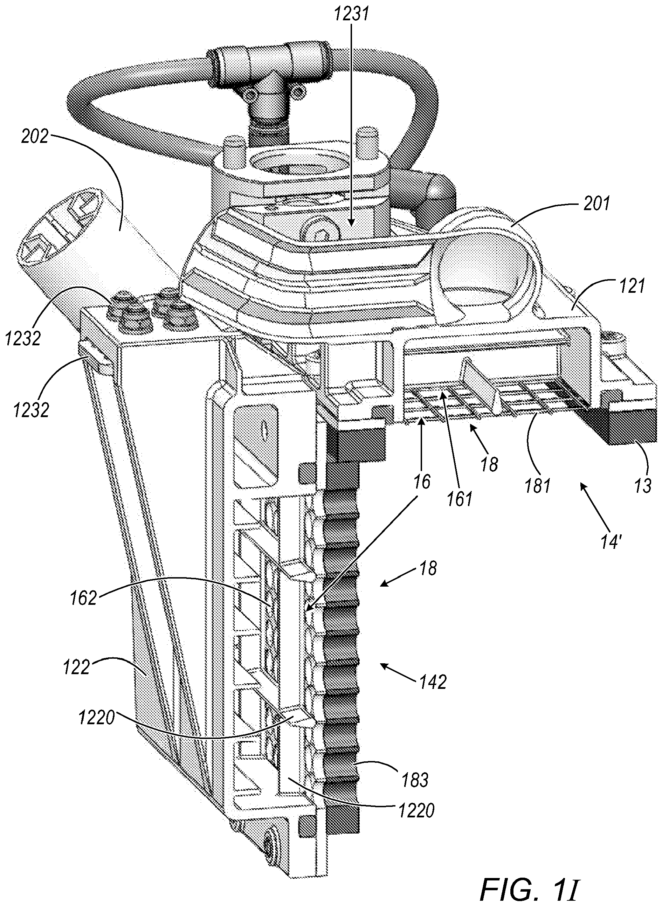

- figure 1I illustrates a cross-sectional perspective view of the first preferred implementation of device according to the present invention;

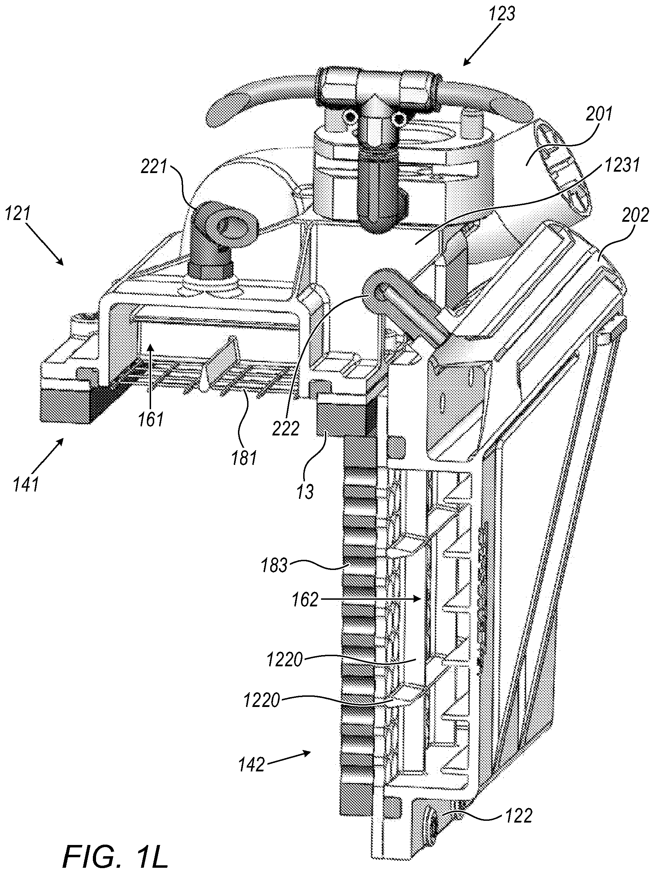

- figure 1L illustrates a cross-sectional perspective view, taken on the opposite side with respect to the one of figure 1I, of the first preferred implementation of device according to the present invention;
- figured 2A to 2C illustrate in respective cross-sectional perspective views a second version of the first preferred implementation of device according to the present invention;
- figure 3A illustrates a perspective view of a second preferred implementation of device according to the present invention, in a first configuration of use;
- figure 3B illustrates a perspective view of the second preferred implementation of device according to the present invention, in the first configuration of use, taken on the opposite side with respect to the one of figure 3A;
- figure 3C illustrates a side elevational view of the second preferred implementation of device according to the present invention, in the first configuration of use;
- figure 3D illustrates a perspective view of the second preferred implementation of device according to the present invention, particularly illustrating a cross-section of the inner part of the first supporting means of the device;
- figure 3E illustrates a perspective view of the second preferred implementation of device according to the present invention, particularly illustrating a cross-section of the inner part of the second supporting means del device;
- figure 3F illustrates a perspective view of a second preferred implementation of device according to the present invention, in a second configuration of use;
- figure 3G illustrates a perspective view of the second preferred implementation of device according to the present invention, in the second configuration of use, taken on the opposite side with respect to the one of figure 3F;
- figure 3H illustrates a side elevational view of the second preferred implementation of device according to the present invention, in the second configuration of use;
- figures 4A to 4C illustrate in a respective side view a third preferred implementation of device according to the present invention, while it performs a climbing over movement of a product and of gripping of another product;
- figure 4D illustrates a perspective view of the third preferred implementation of device in the gripping position of figure 4C;
- figures 5A to 5F illustrate in a respective side view the third preferred implementation of device according to the present invention, while it performs a gripping movement of a corresponding flat sheet, which is moved above a corresponding plurality of products;
- figure 5G illustrates a perspective view of the third preferred implementation of device in the in the release position of the flat sheet on the plurality of products of the previous figure 5F;
- figures 6A to 6C illustrate in respective side view the third preferred implementation of device according to the present invention, while it performs a gripping movement of a product with a translating movement of the second engaging and holding surface;
- figure 6D illustrates a perspective view of the third preferred implementation of device in the gripping position of figure 6C.

### Detailed description of preferred implementations of the invention

In the attached figures da 1A a 1L, a first preferred implementation 10 of a device for gripping or grasping products is illustrated.

Said products are, in particular, in the form of packages, and in a preferred manner they are defined by a corresponding envelope, for example made of a plastic film, or a paper sheet, or other, or made of cardboard which wraps or contains one or more articles.

In particular, in a preferred and anyhow non-limiting manner, said articles are articles of the so-called Tissue field and preferably are in a paper material or in other material, such as woven fabric or non-woven fabric, preferentially being in the form of rolls, in particular rolls of toilet paper, of kitchen paper or for another use, or rolls for the treatment of food products, such as rolls of aluminium foil, plastic film, wax paper film, and the like.

In particular, furthermore, said articles can be in the form of packaging, in particular packs, packets or other containers, in particular for napkins, handkerchiefs, small towels for hands and face, hand towels, bed sheets, sanitary napkins for personal care and other.

Therefore, the device 10 comprises, as illustrated, means 12 for the support of the means 14 for engaging and holding by suctioning the respective product.

Particularly advantageously, it is provided for that said means 14 for engaging and holding by suctioning the respective product define a first 141 and a second 142 surfaces for engaging and holding by suctioning the same product, in particular angularly spaced apart, preferably angularly spaced by an angle equal to, or substantially equal to, 90°.

In this manner, it is possible to easily and efficiently grasp the product, in particular without providing excessive stresses to the same product, especially to the peripheral surface of the same product, i.e., to the film, or sheet, of the package wrapping respective articles, for example to the film, or sheet, which wraps corresponding toilet paper rolls.

Advantageously, while it is not particularly illustrated in the attached figures, said first and second surfaces 141, 142 for engaging and holding by suctioning the same product are adapted to engage respective faces of the product to be grasped, in particular angularly spaced apart faces, and preferably mutually adjacent, of said product, and preferably faces of said product that are angularly spaced apart by an angle equal to, or substantially equal to, 90°.

In this manner, it is possible to operate in a delicate manner, i.e., without creating excessive stress peaks at the product surface to be grasped produced, and the product can thus be taken without damaging the outer envelope, for example of plastic material, which wraps the respective articles, for example in the form of toilet paper rolls wrapped in a respective packaging plastic film.

In an advantageous manner, while it is not particularly illustrated in the attached figures, said first surface 141 for engaging and holding by suctioning the same product is adapted to engage the upper surface of the product.

With advantage, while it is not particularly illustrated in the attached figures, said first surface 141 for engaging and holding by suctioning the same product is adapted to engage the upper surface of the product at a central, or substantially central, zone thereof.

With particular advantage, while it is not particularly illustrated in the attached figures, the second surface 142 for engaging and holding by suctioning the same product is adapted to engage a side surface of the same product.

In an advantageous manner, while it is not particularly illustrated in the attached figures, said second surface 142 for engaging and holding by suctioning the same product is adapted to engage the side surface of the corresponding product in the proximity of the upper surface of the same product, i.e., of the upper surface of the same side surface of the product.

As is clear from said figures, with advantage, said first surface 141 for engaging and holding by suctioning the same product has a respective longitudinal extension l1 that is greater than the longitudinal extension I2 of said second engaging surface 142.

However, while said longitudinal extension is added with the first engaging surface 141, which is particularly preferred, it shall anyhow be understood that the fact to obtain engaging and holding surfaces 141, 142, which have substantially the same longitudinal extension, or with said second engaging and holding surface 142 having a longitudinal extension larger than that of said first engaging and holding surface 141 is also able to be devised.

As is clear from said figures, with advantage, said first surface 141 for engaging and holding by suctioning the same product has a respective transversal extension t1 that is lesser than the corresponding transversal extension t2 of said second engaging surface 142.

In this manner, in particular, it is possible to exert a greater holding action upon the less-stressed side surface of the product and, ultimately, a good distribution of the withdrawal stresses between the upper part and the side part of the product or package is obtained.

However, while said longitudinal extension is added with the second engaging surface, which is adapted to engage the side face of the product, particularly which is particularly preferred, it shall anyhow be understood that the fact to obtain engaging and holding surfaces of the upper and side faces that have substantially the same transversal extension, or with said second engaging and holding surface of the side surface of the product that has a transversal extension that is less than that of said first engaging and holding surface of the upper face of the product is also able to be devised.

Advantageously, as is clear from said figures, said supporting means 12 define corresponding suctioning chamber means 16 upstream of said first and second surfaces 141, 142 for engaging and holding by suctioning the same product.

With particular advantage, as is clear from said figures, said suctioning chamber means 16 comprise corresponding first and second suctioning chambers 161, 162, respectively upstream of said first and second surfaces 141, 142 for engaging and holding by suctioning the same product.

As is clear from said figures, in an advantageous manner, said supporting means 12 of the device 10 comprise a first and a second supporting bodies 121, 122 respectively for said first and second surfaces 141, 142 for engaging and holding by suctioning the same product.

As is clear from said figures, with advantage, said first and second bodies 121, 122 respectively for supporting said first and second surfaces 141, 142 for engaging and holding by suctioning the same product define a respective suctioning chamber 161 or 162 upstream of the respective surface 141, 142 for engaging and holding by suctioning the same product 141, 142.

With advantage, as defined in the claims, as is clear from said figures, at the respective surface 141, 142 for engaging and holding by suctioning the same product, corresponding means 18 for the passage of said suctioning flow are provided.

In a further advantageous manner, as is clear from said figures, said means 18 for the passage of said suctioning flow comprise, in particular on the first supporting body 121, a respective large suctioning opening 180 at which a corresponding grid 181, in particular a metal grid, is provided for the passage of a corresponding suctioning air.

Advantageously, as is clear from said figures, the respective surface for engaging and holding the product, in particular said first surface 141 for engaging and holding the product, is defined by a corresponding annular lip 141, in particular having an elongated configuration, preferably defined by a corresponding body 13 of elastic material provided at the front face of the corresponding, or first, supporting body 121 and defining said suctioning opening 180.

Especially, as illustrated, said annular body 13 is secured to the front face of said corresponding, or first, supporting body 121.

As is clear from said figures, with advantage, said body 13 of elastic material at the front face of the corresponding, or first, supporting body 121 is adapted to hold said grid 181 to the same supporting body 121, in particular clamping the edges of the same grid 181 between the rear surface of the same body of elastic material 13 and a corresponding front surface of the corresponding, or first, supporting body 121.

However, it shall be understood that also means that are different from the means 180, 181 and 13 illustrated above could be anyhow devised. For example, the grid 181 and said peripheral body 13 could be replaced with any other porous material, such as a corresponding spongy material, preferably provided with corresponding through holes of said suctioning flow.

In an advantageous manner, as is clear from said figures, the respective surface for engaging and holding by suctioning the same product, in particular said second surface 142 for engaging and holding by suctioning the same product, is defined by the front surface of a pad 182, preferably made of elastic material, at the front face of the corresponding, or second, supporting body 122.

With particular advantage, as is clear from said figures, said means 18 for the passage of said suctioning flow comprise, in particular on the second supporting body 122, a plurality of passages 183, in particular evenly distributed, for a corresponding suctioning flow, in particular provided at the outer surface of a pad 182, preferably made of elastic material, in particular said pad 182 defining said surface 142 for engaging and holding by suctioning a corresponding face, in particular the side face, of the product, i.e., the second surface 142 for engaging and holding by suctioning provided on the second supporting body 122 of the same device 10.

However, it shall be understood that said second engaging surface could also be produced in a different manner with respect to said pad 182. In particular, in accordance with a further embodiment, said engaging surface 142 could also be defined by a plurality of, for example two, pads, perhaps respectively having through holes with a diameter that is different from one another.

Advantageously, as is clear from said figures, said means 14 for engaging by suctioning the respective product, i.e., the respective surface 141, 142 for engaging and holding by suctioning the same product, have, or has, means 20 for sealing the contact with the opposite face of the product to be grasped.

In an advantageous manner, as is clear from said figures, said means 20 for sealing the contact with the opposite surface of the product comprise said annular lip 141, in particular having an elongated configuration, preferably defined by a corresponding body 13 of elastic material defining the respective product engaging and holding surface, in particular said first surface 141 for engaging and holding the product.

With advantage, as is clear from said figures, said means 20 for sealing the contact with the opposite surface of the product comprise a peripheral portion 184, of a pad 182, preferably made of elastic material, defining respective surface for engaging and holding by suctioning the same product, in particular said second surface 142 for engaging and holding by suctioning thereof.

In an advantageous manner, as is clear from said figures, said supporting means 12 comprise corresponding means 20 for the connection to means, not illustrated in particular in the attached figures, for generating a suctioning flow, in particular corresponding conduits of the suctioning circuit.

In an advantageous manner, as is clear from said figures, said means 18 for the connection to means for generating a suctioning flow, in particular corresponding conduits of the suctioning circuit comprise corresponding tubular portions 201, 202 projecting from said supporting means 12 and in connection with the respective first and second suctioning chambers 161, 162 respectively upstream of said first and second surfaces 141, 142 for engaging and holding by suctioning the same product.

With particular advantage, as is clear from said figures, a first and a second projecting tubular portions 181, 182 defining said means 18 for the connection to means for generating a suctioning flow are provided, which respectively extend from said first and from said second supporting bodies121, 122, in particular from the first supporting body 121 superiorly and towards the rear part of the device and posteriorly upwards from the second supporting body 122.

In particular, said suctioning tubular portions 181, 182 are positioned in connection with a common suctioning circuit, and adjusting means can be provided, for suitably differentiate the suction flow rate between the same suctioning tubular portions 181, 182, i.e., the same suctioning tubular portions 181, 182 can be each connected to a respective and different suctioning device, in particular so as to obtain suction flow rates that are suitably different from one another.

Furthermore, said projecting tubular portions 181, 182 may also have, unlike what has been illustrated, diameters that are suitably different from one another.

With advantage, as is clear from said figures, said supporting means 12 comprise connecting means 123 between said first and second supporting bodies 121, 122 respectively of said first and second surfaces 141, 142 for engaging and holding by suctioning the same product.

In an advantageous manner, as is clear from said figures, said connecting means 123 between said first and second supporting bodies 121, 122 respectively of said first and second surfaces 141, 142 for engaging and holding by suctioning the same product are in the form of a corresponding bracket, in particular a metal grid, 123, which is interposed between said first and second supporting bodies 121, 122.

Advantageously, as is clear from said figures, said connecting means, or bracket, 123 between said first and second supporting bodies 121, 122 have a respective longitudinal portion 1231 and a respective perpendicular portion, in particular oblique, 1232 respectively, for supporting said first and second supporting bodies 121, 122, i.e., consequently, respectively, for said first and second surfaces 141, 142 for engaging and holding by suctioning the same product.

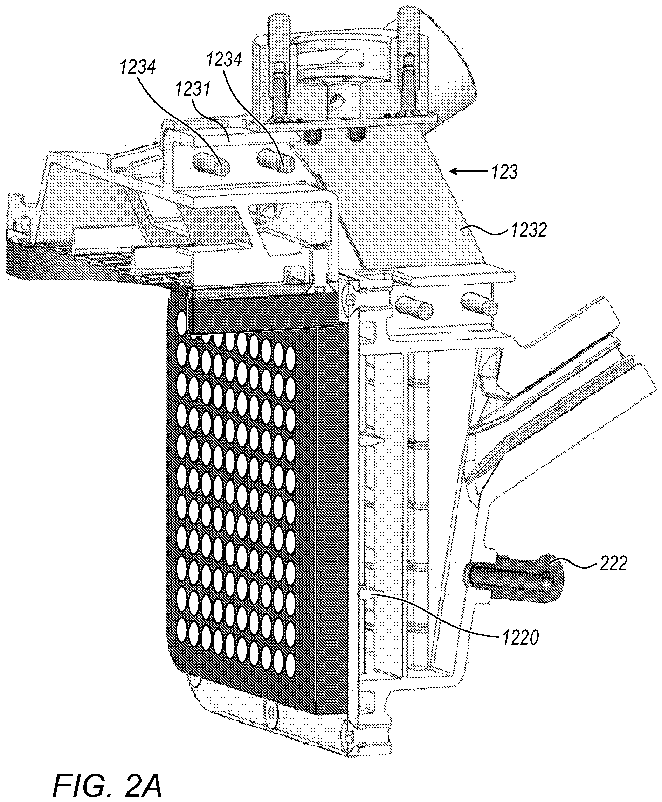

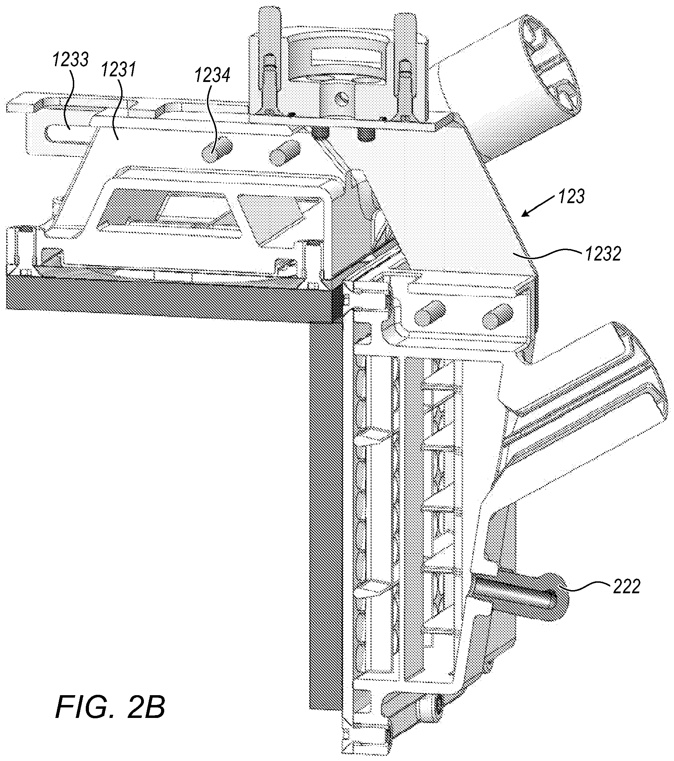

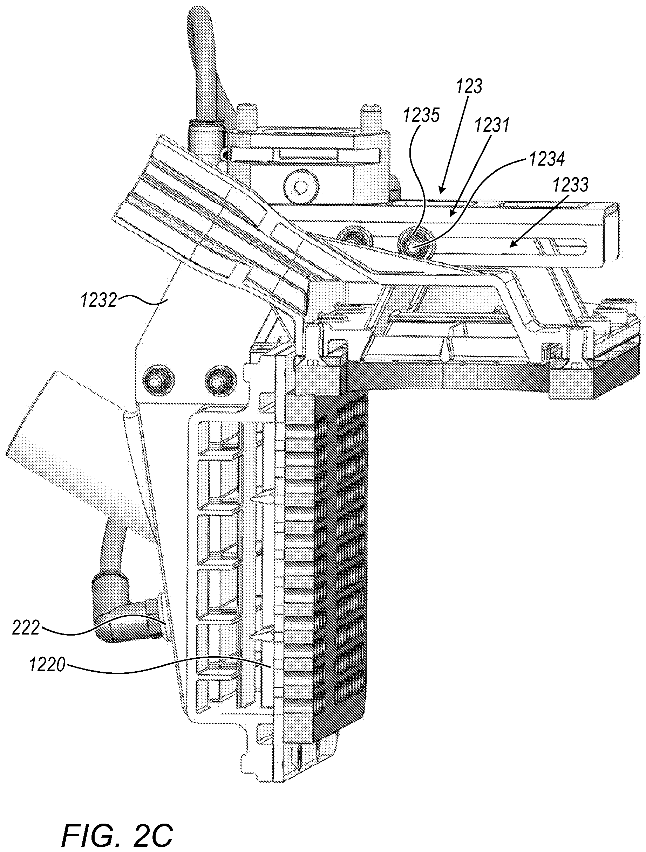

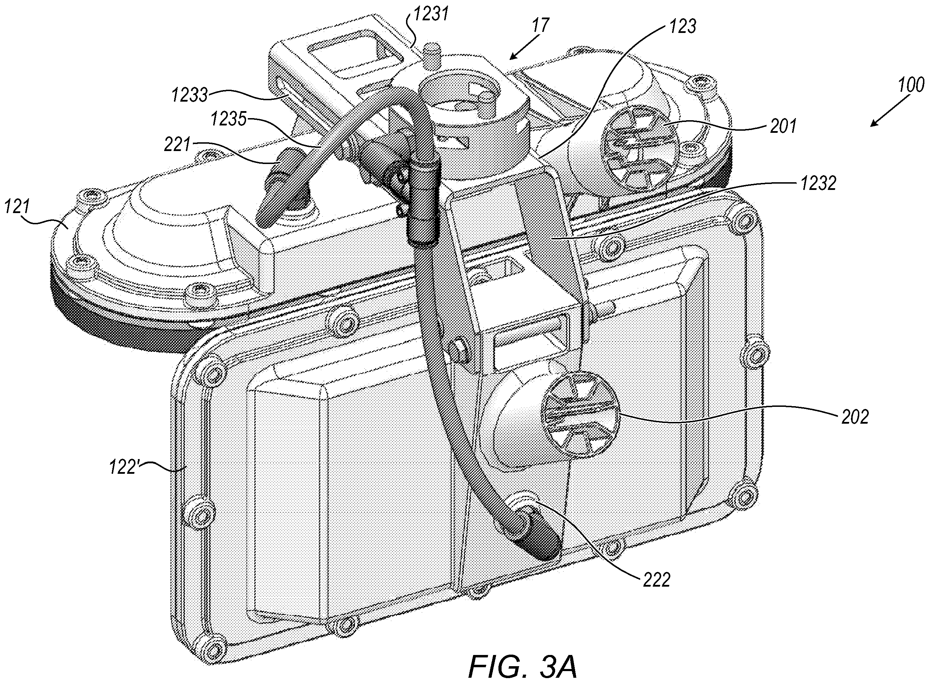

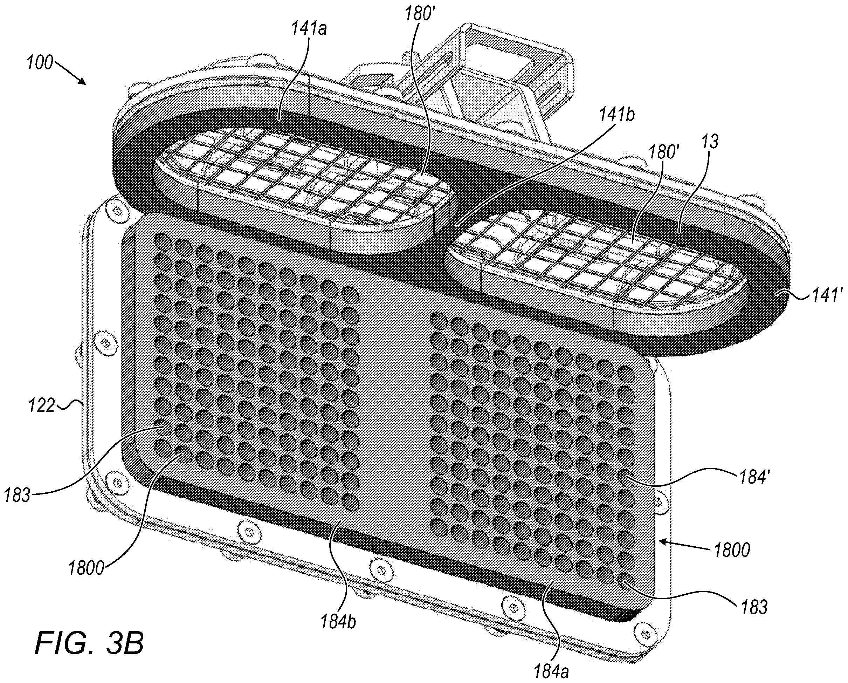

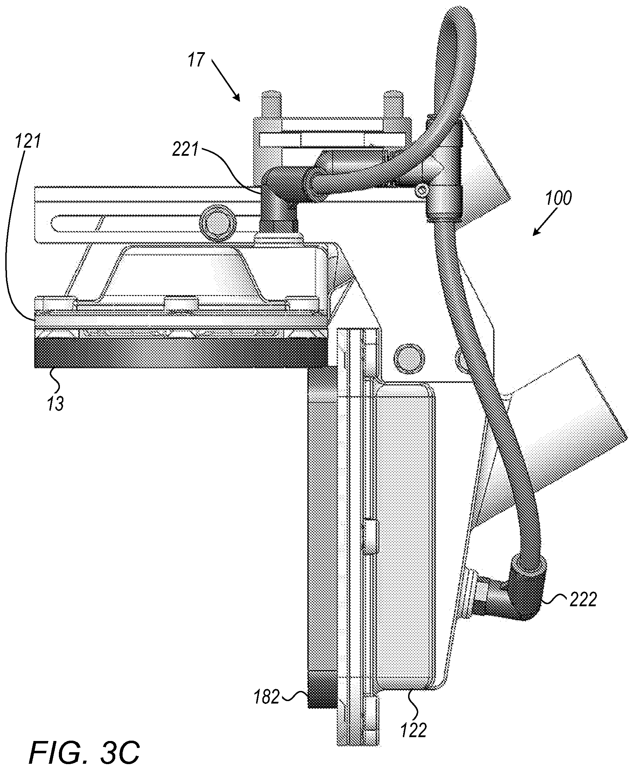

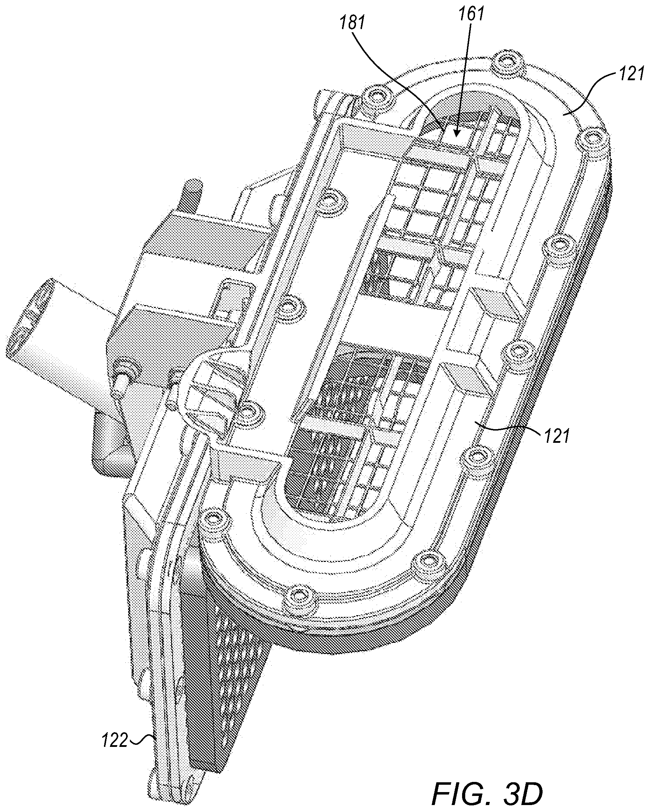

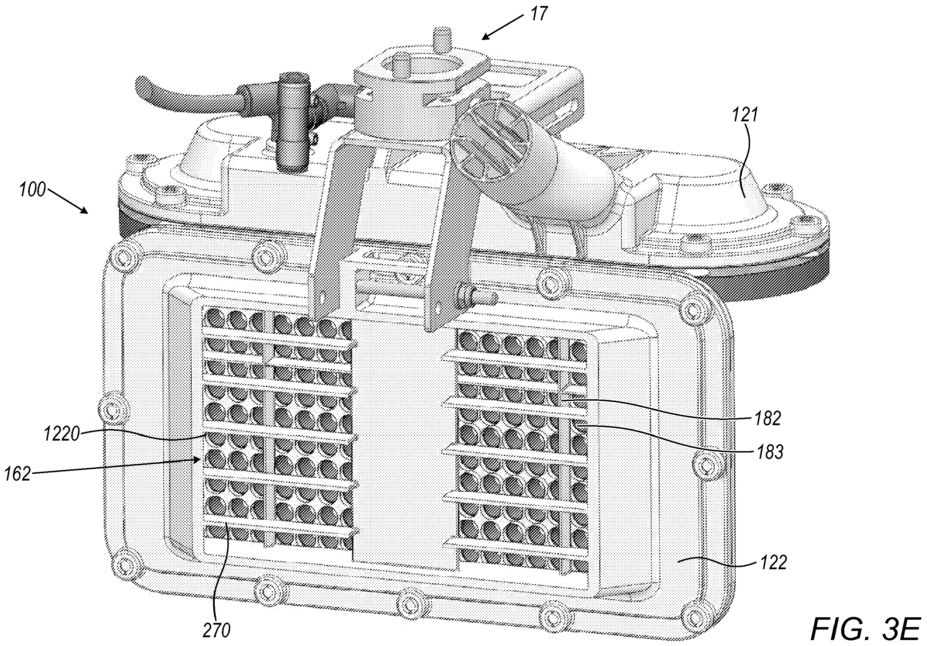

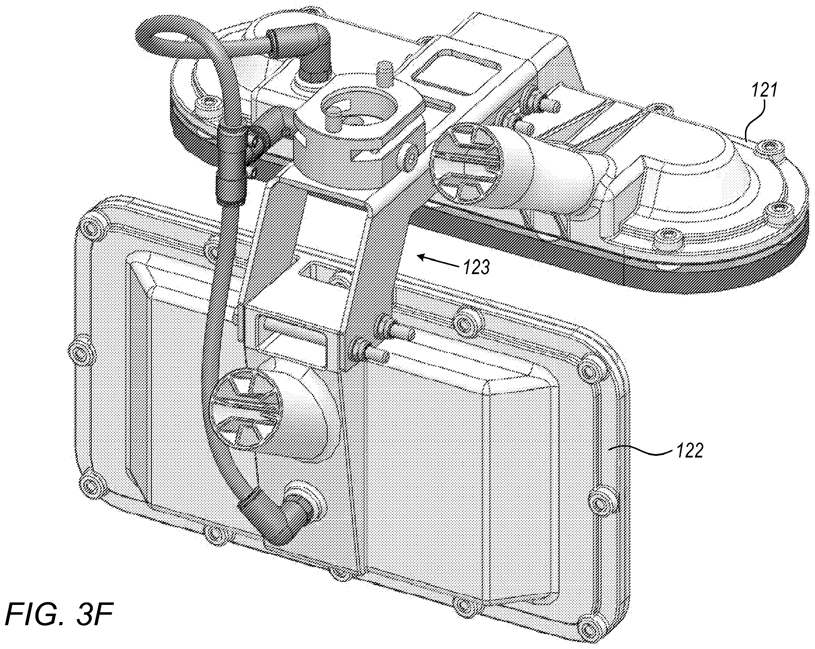

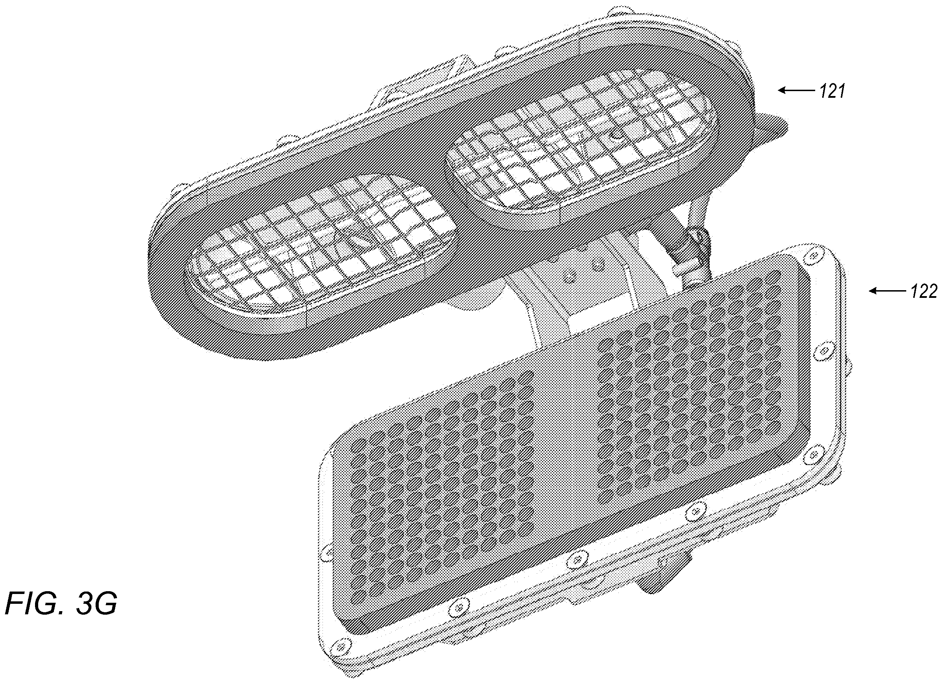

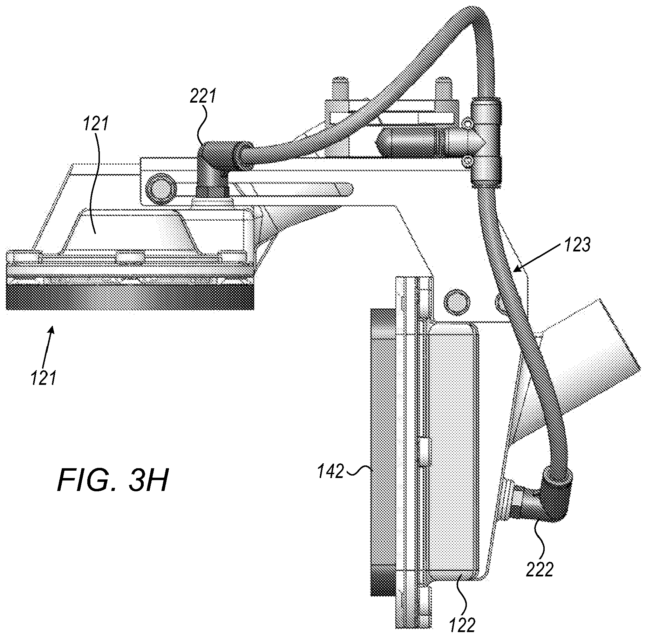

Advantageously, as is clear from the following figures 2A to 2C, regarding a second version of the first preferred implementation of device, and from figures 3A to 3H regarding a second preferred implementation 100 of device, which will be anyhow best understood from the following of the present description, means 1233 for adjusting the relative position between said first and second supporting bodies 121, 122 are provided, in particular the perpendicular relative position between said first and second supporting bodies 121, 122.

In this manner, it is possible to adjust the device to different types or product sizes.

In an advantageous manner, as is clear from said figures, said means 1233 for adjusting the relative position between said first and second supporting bodies 121, 122, in particular the perpendicular relative position between said first and second supporting bodies 121, 122, are provided on said connecting means, or bracket, 123 between said first and second supporting bodies 121, 122.

With advantage, as is clear from said figures, said means 1233 for adjusting the relative position between said first and second supporting bodies 121, 122, in particular the perpendicular relative position between said first and second supporting bodies 121, 122, comprise, in particular on said longitudinal portion 1231 of said connecting means, or bracket, 123 between said first and second supporting bodies 121, 122, respective elongated-slot means 1233 for the sliding of corresponding pins 1234 for supporting the corresponding, or first, body 121 of the respective surface 141 for engaging and holding by suctioning the product, which supporting pins 1234 can be blocked in the corresponding, preferably perpendicular, position, especially through corresponding tightening screws 1235.

Although means for adjusting the perpendicular relative position between said first and second holding means 141, 142 have been illustrated, it can anyhow be devised to be able to adjust the relative position of the same said first and second holding means 141, 142 according to any other desired direction, for example, according to a direction that is longitudinal thereto.

With particular advantage, as is clear from said figures, attachment means 17 are provided, in particular for a rapid attachment to means for moving said device 10, in particular defined by the arm of a corresponding robot.

In an advantageous manner, said attachment means 17, in particular for a rapid attachment to means for moving said device 10, in particular defined by the arm of a corresponding robot, are provided on said connecting means 123 between said first and second supporting bodies 121, 122 define, and in particular extend superiorly from the same connecting means, or bracket, 123 between said first and second supporting bodies 121, 122.

Particularly advantageously, as is clear from said figures, means 22 for releasing the product from the device are provided.

With advantage, as is clear from said figures, said means for releasing the product from the device comprise means 221, 222 for ejecting a compressed air flow at the respective surface 141, 142 for engaging and holding by suctioning the same product, in particular at said first and second surfaces 141, 142 for engaging and holding by suctioning the same product.

In an advantageous manner, as is clear from said figures, said means for releasing the product from the device comprise respective first and second conduits 221, 222 for ejecting a compressed air flow in connection with said first and second suctioning chambers 161, 162 respectively upstream of said first and second surfaces 141, 142 for engaging and holding by suctioning the same product, and in particular provided at the respective first and second supporting bodies 121, 122 of the device 10.

It shall anyhow be understood that said first and second conduits 221, 122 for ejecting a compressed air flow can be supplied by a single circuit with optional means for adjusting the flow rate, in order to suitably differentiate the release action respectively on the first and on the second engaging and holding means 141, 142, i.e., they could also be supplied by circuits generating a compressed airflow that are mutually different and independent, in particular in order to be able to suitably differentiate the release action respectively on the first and on the second engaging and holding means 141, 142.

Advantageously, as is clear from said figures, the respective supporting body 122, in particular said second supporting body 122 of the device 10, has means 1220 for a rear support of the respective pad 182, preferably of elastic material, defining said surface 142 for engaging and holding by suctioning the product.

With particular advantage, as is clear from said figures, said rear supporting means of the respective pad 182, preferably of elastic material, defining said surface 142 for engaging and holding by suctioning the product, comprise a plurality of transversal ribs 1220, defining anteriorly the corresponding suctioning chamber 162, and spaced apart one from the other to define a suitable passage for the suctioning flow of the product.

In an advantageous manner, as is clear from said figures, said means 14 for engaging by suctioning the respective product, in particular the surface 141, 142 for engaging and holding by suctioning the same product, i.e., the respective supporting body 121, 122, have, or has, an elongated, in particular longitudinally elongated shape.

With advantage, as is clear from said figures, in particular with regard to the first preferred implementation of device, said means 14 for engaging by suctioning the respective product, in particular the respective surface 142 for engaging and holding by suctioning the same product have, i.e., the respective supporting body 121, 122, have, or has, a substantially or generally quadrangular shape, in particular squared, or rectangular, as provided in the second preferred implementation of device, which will be best understood from the following of the present description.

In the following figures 3A to 3H, a second preferred implementation 100 of device according to the present invention is illustrated, the components of which that are similar, or equivalent, to those of the previous preferred implementation are marked with the same reference numerals and, in order not to excessively burden the present description, are not commented in detail again.

The present second preferred implementation 100 of device is distinguished from the first preferred implementation of device in that the respective surface for engaging and holding the product, in particular said first surface 141 for engaging and holding the product, is defined by a corresponding shaped lip 141', in particular having an elongated configuration, preferably defined by a corresponding body 13 of elastic material provided at the front face of the corresponding, or first, supporting body 121 and defining a first and a second suctioning openings 180', 180', longitudinally mutually aligned.

Said shaped lip 141', in particular having an elongated configuration, preferably defined by a corresponding body 13 of elastic material provided at the front face of the corresponding, or first, supporting body 121 and defining said suctioning openings 180', 180', substantially comprises an outer elongated portion, in particular having a generally elliptical shape, 141a and an intermediate portion 141b for the connection between opposite longitudinal sides of said outer elongated portion 141a, and in particular extending at the median zones of the same longitudinal sides.

In this manner, it is possible to obtain a firmer and/or tighter grip of the product on the respective engaging side.

Furthermore, the present second preferred implementation 100 of device is distinguished from the first preferred implementation of device in that the respective engaging and holding surface, in particular said second surface 142 for engaging and holding by suctioning the same product, is defined by the front surface of a pad 182, preferably made of elastic material, at the front face of the corresponding, or second, supporting body 122, which defines, with a respective shaped body 184 means for sealing the contact with the opposite surface of the product which define a first and a second suctioning zones 1800, 1800, in particular longitudinally mutually aligned, and in which corresponding through or passage holes 183 are provided.

In particular said shaped lip 184 is defined by a peripheral portion 188a, from the intermediate zone of which of the opposite ling sides a corresponding transversal portion 184b extends, which divides, in said engaging pad 182, said first and second suctioning zones1800, 1800.

In this manner, it is possible to obtain a firmer and/or tighter grip of the product on the respective engaging side.

Furthermore, as is clear from said first and second preferred implementation, the respective surface 141 for engaging and holding by suctioning the same product has a generally elliptical configuration, in particular having a profile composed of parallel longitudinal lengths 1401, 1401, joined to one another at the opposite longitudinal ends through corresponding semi-circular, or substantially semi-circular, lengths, 140c, 140c.

In this manner, it is possible to advantageously engage products, in particular respective packages of rolls, that have a similar configuration of the respective face, in particular of the upper face thereof.

However, it shall be understood that the configuration of the respective engaging and holding surface can be any, in particular, besides being elongated, it can be quadrangular, rectangular or elliptical, even having a circular shape, or another shape.

In an advantageous manner, said supporting means 12, i.e., said first and second supporting bodies 121, 122, are of plastic material, preferably obtained through a tridimensional printer.

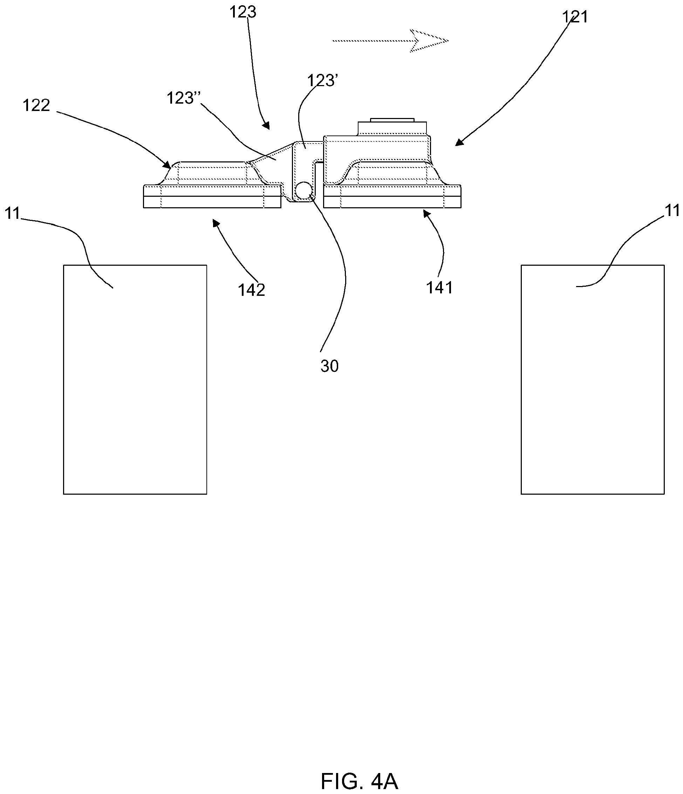

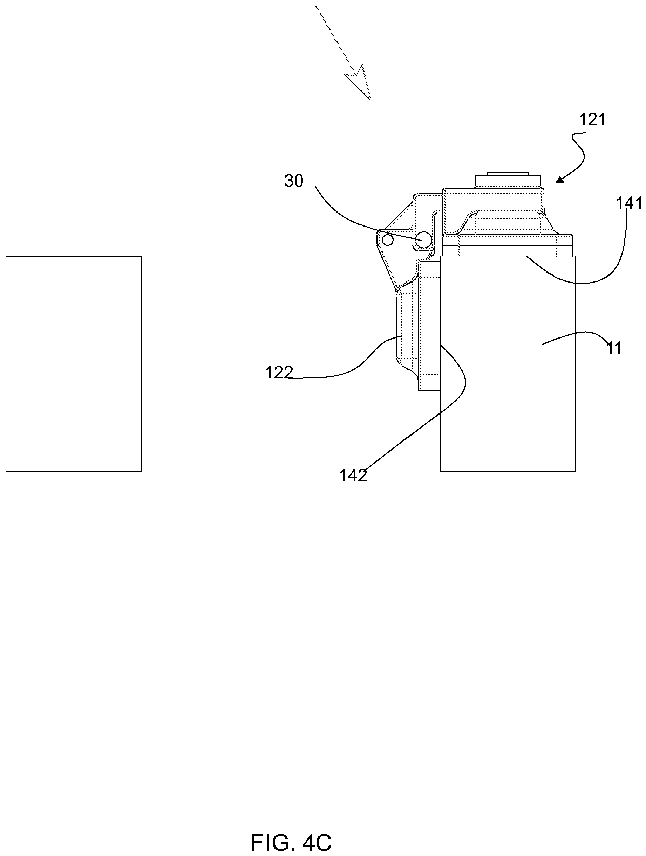

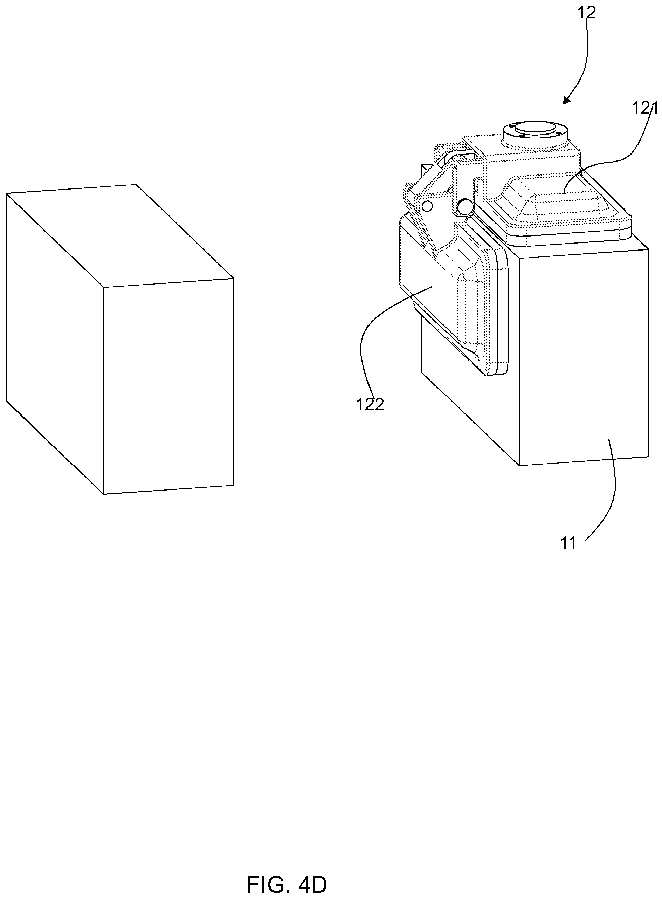

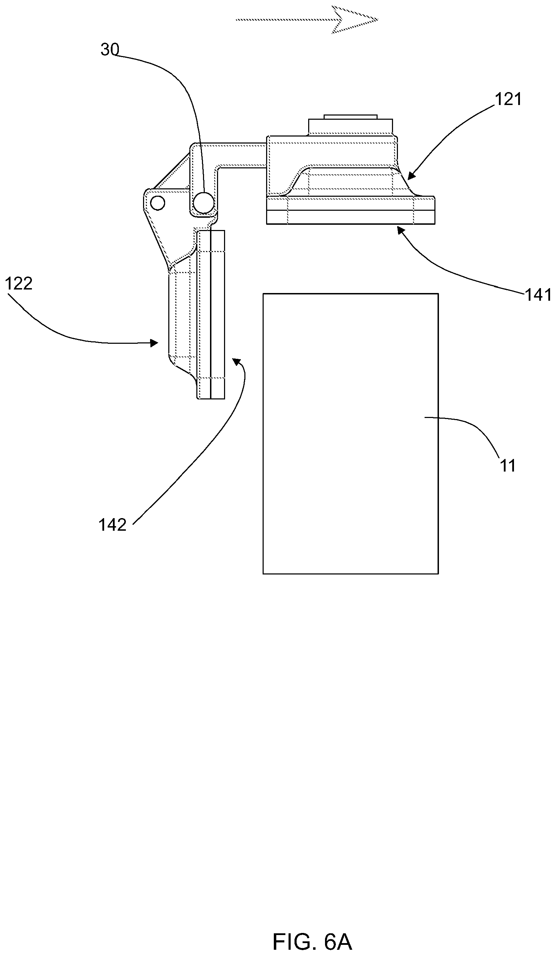

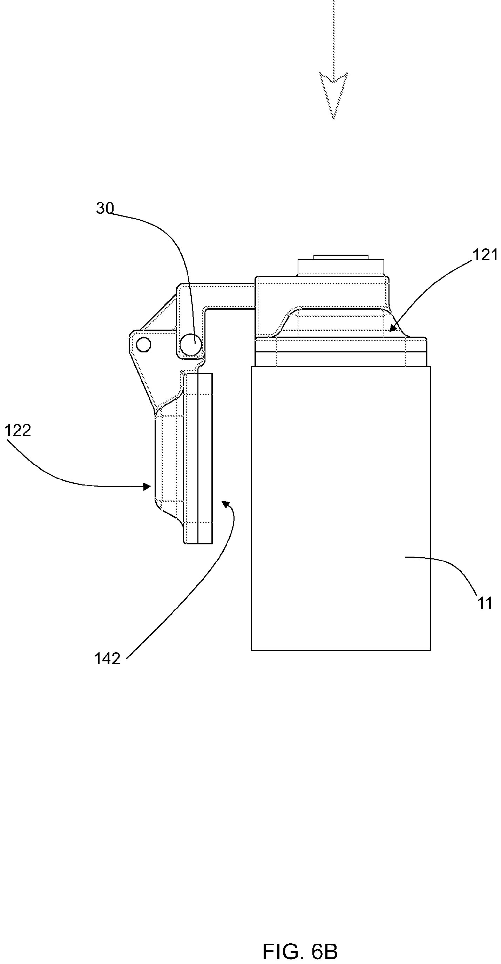

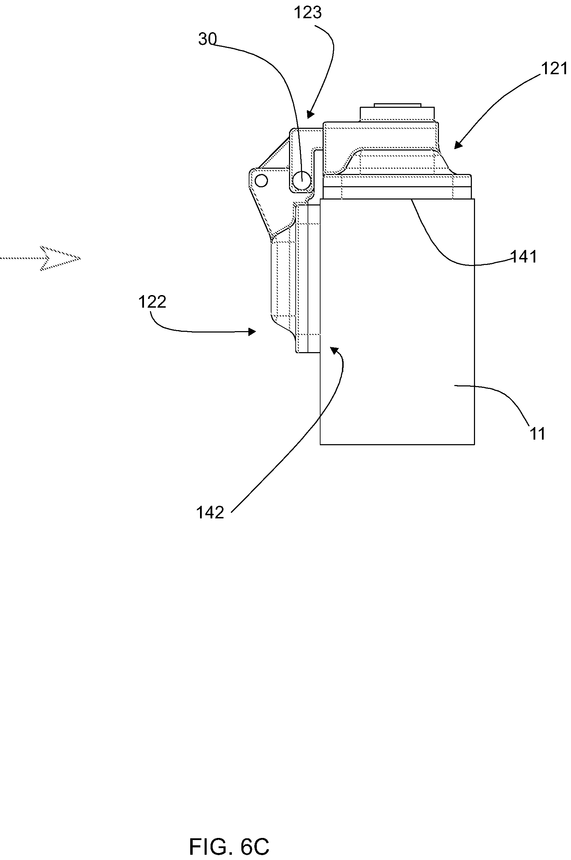

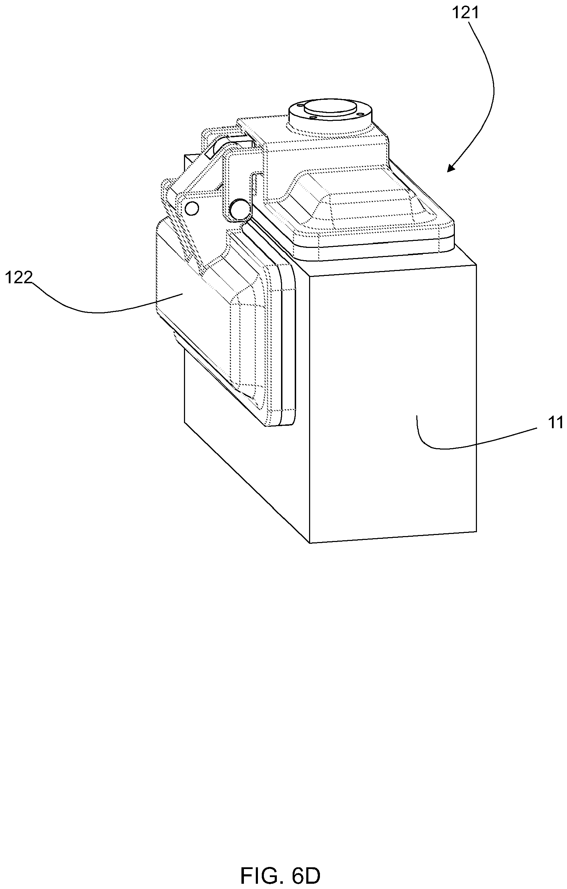

In the following figures 4A to 6D, a third preferred implementation of device is illustrated, which third implementation has components that are similar or equivalent to those of the previous preferred implementations, which are marked by the same numeral references that were used in the previous preferred implementations and which, in order not to excessively burden the present description, are not commented in detail again.

Advantageously, as is clear from said figures 4A to 6D, in this third preferred implementation of device, means 14 for engaging and holding by suctioning the respective product 11 are provided, which define a first 141 and a second 142 surfaces for engaging and holding by suctioning the same product, which are movable one with respect to the other one.

With advantage, therefore, as is clear from said figures 4A to 6D, a first and a second supporting bodies 121, 122 are provided, respectively for supporting for said first and second surfaces 141, 142 for engaging and holding by suctioning the same product, which are movable one with respect to the other one.

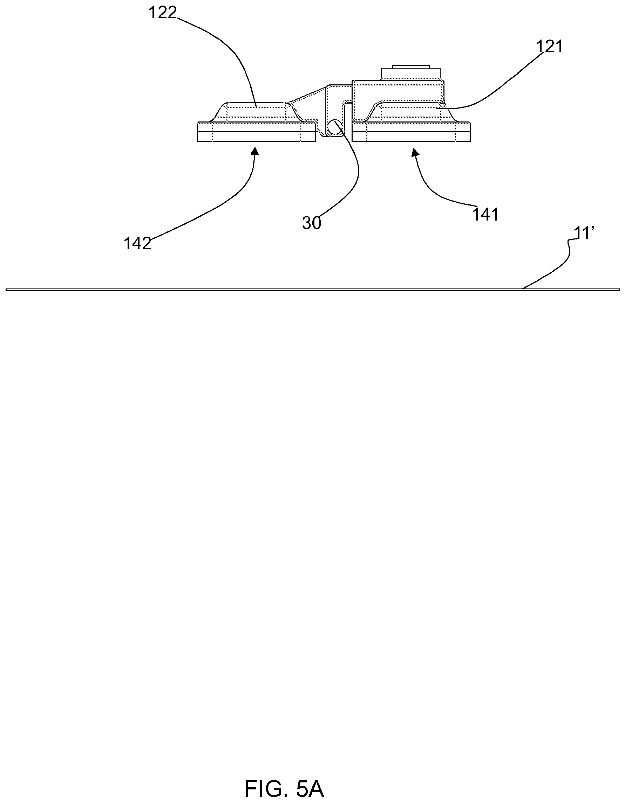

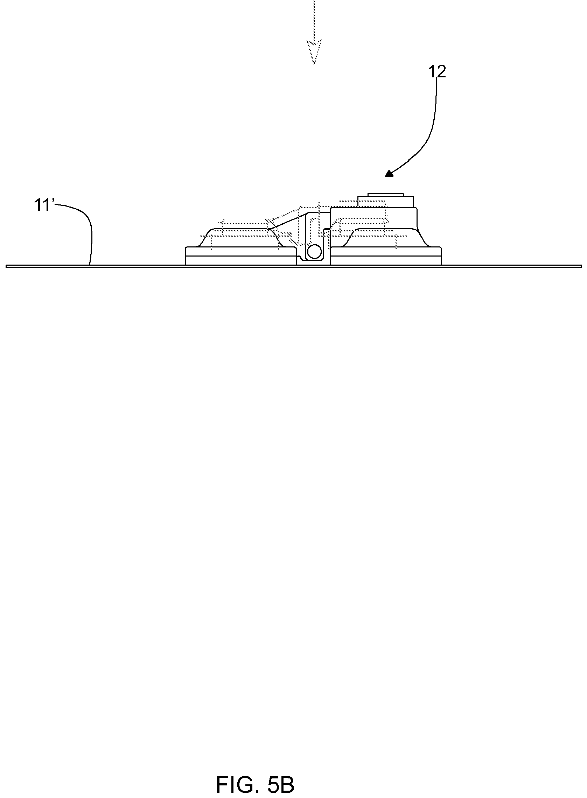

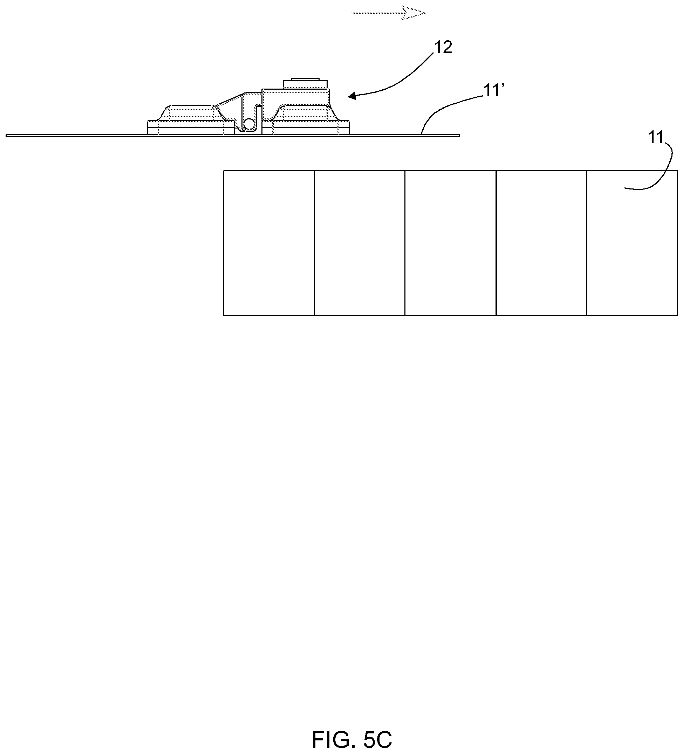

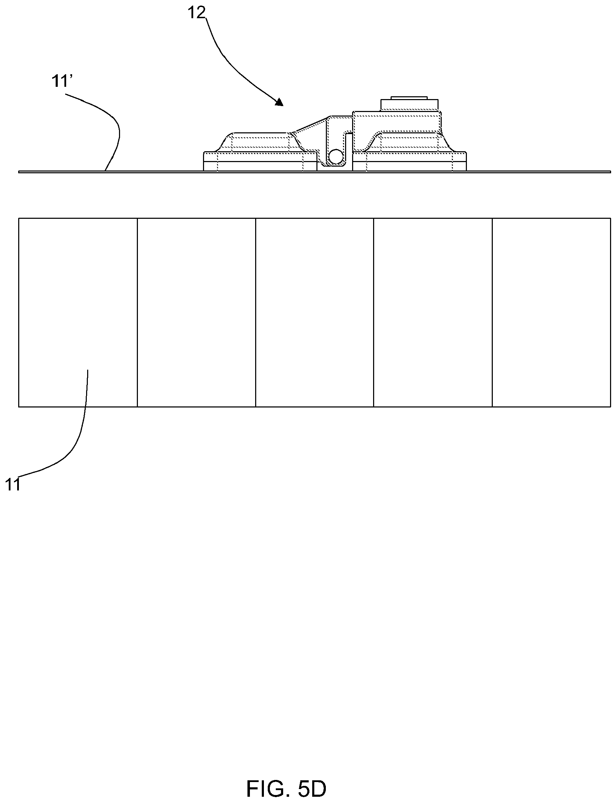

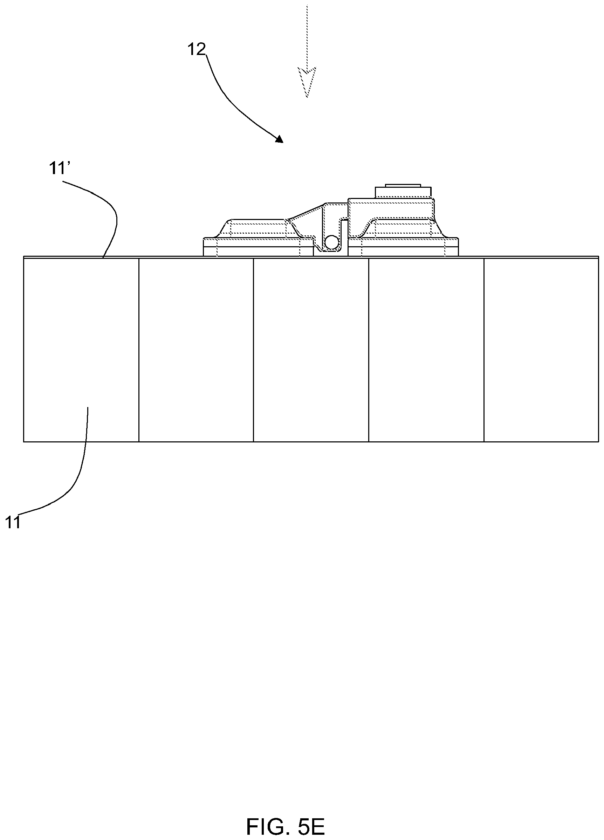

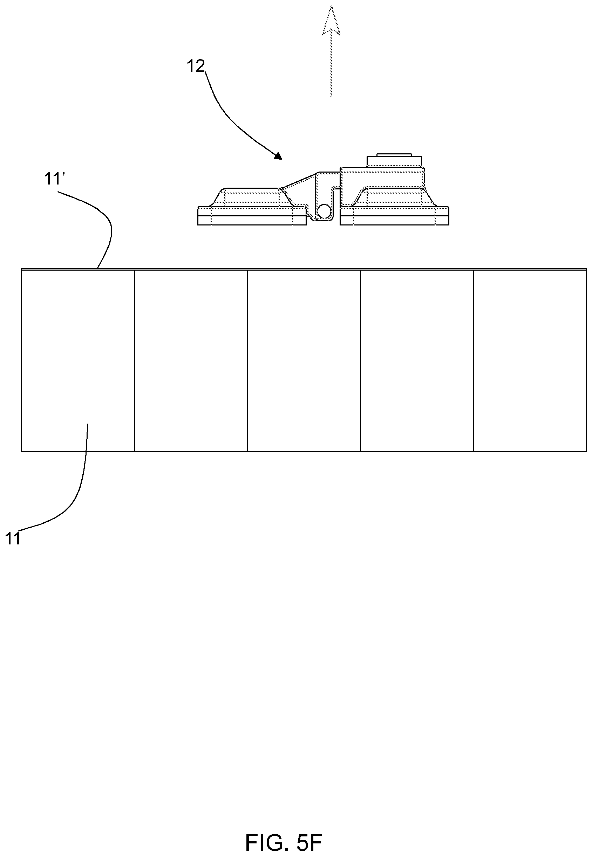

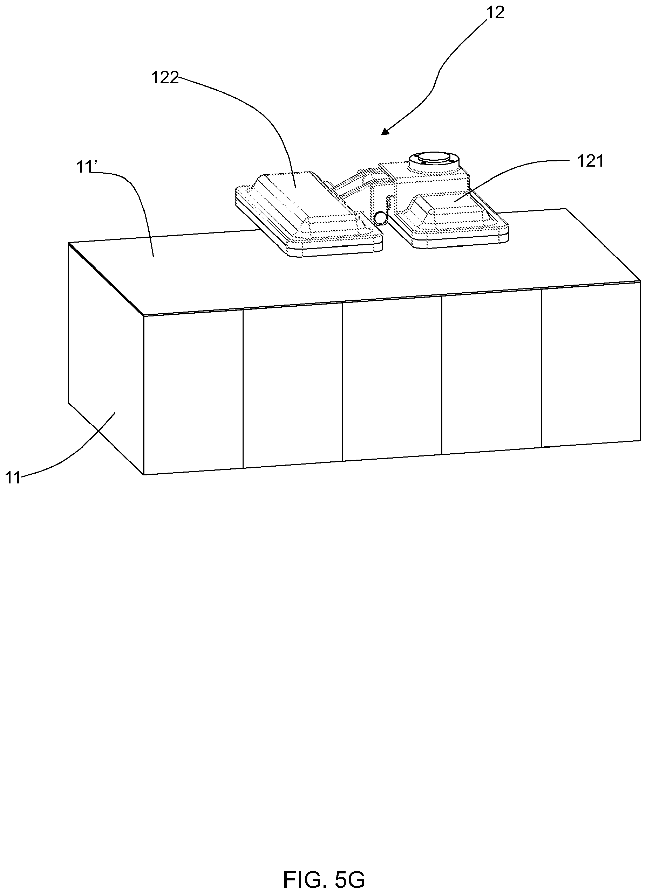

With advantage, said first 141 and second 142 surfaces for engaging and holding by suctioning the same product are movable one with respect to the other one in a position, in particular a resting or lifted position, for example illustrated in said figures 4A, and 5A to 5G, in which they are aligned or substantially mutually aligned.

Advantageously, as is clear from said figures 4A to 6D, said first and second supporting bodies 121, 122 respectively for said first and second surfaces 141, 142 for engaging and holding by suctioning the same product are movable one with respect to the other one in a position, in particular a resting or lifted position, in which they are aligned or substantially mutually aligned.

Advantageously, as is clear from said figures 4A to 6D, said second surface 142 for engaging and holding by suctioning the same product 11 is movable with respect to the first surface 141 for engaging and holding by suctioning the same product 11 in a position, in particular a resting or lifted position, in which said first 141 and second 142 surfaces for engaging and holding by suctioning the same product are aligned or substantially mutually aligned.

As is clear from said figures 4A to 6D, in an advantageous manner, said second supporting body 122, for said second surface 141, 142 for engaging and holding by suctioning the same product 11, is movable with respect to said first supporting body 121, for said first surface 141 for engaging and holding by suctioning the same product 11, in a position, in particular a resting or lifted position, in which said first and second supporting bodies 121, 122 are aligned or substantially mutually aligned.

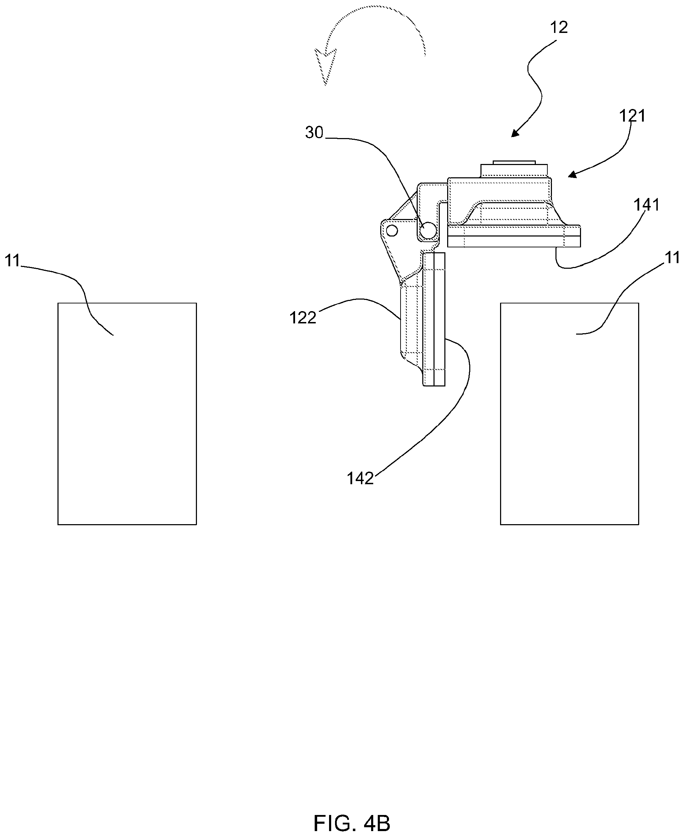

In an advantageous manner, said first 141 and second 142 surfaces for engaging and holding by suctioning the same product 11 are movable with respect to one another in a position, in particular an engaging position of the product 11, in which they are angularly spaced apart, in particular by 90°, or substantially by 90°, in particular well illustrated in said figures 4B to 4D and 6A to 6D.

Advantageously, as is clear from said figures 4B to 4D and 6A to 6D, said first and second supporting bodies 121, 122 respectively for said first and second surfaces 141, 142 for engaging and holding by suctioning the same product are movable one with respect to the other one, in a position, in particular an engaging position of the product 11, in which they are angularly spaced apart from one another, in particular by 90°, or substantially by 90°.

As is clear from said figures 4A to 6D, particularly advantageously, said second surface 142 for engaging and holding by suctioning the same product 11 is movable with respect to the first surface 141 for engaging and holding by suctioning the same product 11 in a position, in particular an engaging position of the product 11, in which they are angularly spaced apart, in particular by 90°, or substantially by 90°.

Advantageously, as is clear from said figures 4A to 6D, said second supporting body 122, for said second surface 141, 142 for engaging and holding by suctioning the same product 11, is movable with respect to said first supporting body 121, for said first surface 141 for engaging and holding by suctioning the same product 11, in a position, in particular an engaging position of the product 11, in which they are angularly spaced apart from one another, in particular by 90°, or substantially by 90°.

Particularly advantageously, as is most clear from figure 4B, means 30 for a relative rotation between a first 141 and a second 142 surfaces for engaging and holding by suctioning the same product 11 are provided, in particular according to a respective angular direction, especially by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

As is clear as is most clear from said figure 4B, with advantage, means 30 for a relative rotation of the second surface 142 for engaging and holding by suctioning the same product 11 are provided, with respect to the surface 141 for engaging and holding by suctioning the same product 11, in particular according to a respective angular direction, especially by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

Advantageously, as is most clear from figure 4B, means 30 for a rotation between a first and a second supporting bodies 121, 122 respectively for said first and second surfaces 141, 142 for engaging and holding by suctioning the same product are provided, in particular according to a respective angular direction, in particular by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

Advantageously, as is clear from said figures 4A to 6D, means 30 for a rotation of said second supporting body 122 are provided, for said second surface 141, 142 for engaging and holding by suctioning the same product 11, is movable with respect to said first supporting body 121, for said first surface 141 for engaging and holding by suctioning the same product 11, in particular according to a respective angular direction, in particular by an angle equal to, or substantially equal to, 90°, especially between a position in which said first 141 and second 142 surfaces for engaging and holding by suctioning the same product 11 are aligned or substantially mutually aligned, and a position in which said first 141 and second 142 surfaces for engaging and holding by suctioning the same product 11 are angularly spaced apart, in particular by 90°, or substantially by 90°.

As is clear from said figures 4A to 6D, in an advantageous manner, said rotation between said first 141 and second 142 surfaces for engaging and holding by suctioning the same product, and/or between said first and second supporting bodies 121, 122 respectively for said first and second surfaces 141, 142 for engaging and holding by suctioning the same product said first 141 and second 142 surfaces for engaging and holding by suctioning the same product, occurs according to a respective horizontal axis.

With advantage, as is clear from said figures 4A to 6D, said rotation between said first 141 and second 142 surfaces for engaging and holding by suctioning the same product, and/or between said first and second supporting bodies 121, 122 respectively for said first and second surfaces 141, 142 for engaging and holding by suctioning the same product said first 141 and second 142 surfaces for engaging and holding by suctioning the same product, occurs according to an axis parallel to the adjacent sides of said first 141 and second 142 surfaces for engaging and holding by suctioning the same product, and/or said first and second supporting bodies 121, 122 respectively for said first and second surfaces 141, 142 for engaging and holding by suctioning the same product.

Advantageously, as is clear from said figures 4A to 6D, said rotation means 30 are provided for between said first 141 and said second 142 surfaces for engaging and holding by suctioning the same product, and/or between said first and said secondo supporting bodies 121, 122 respectively for said first and second surfaces 141, 142 for engaging and holding by suctioning the same product, are in the form of, or defined by, a corresponding rotation hinge 30.

As is clear from said figures 4A to 6D, particularly advantageously, said rotation means, or respective hinge, 30 are at the connecting means 123 between said first and second supporting bodies 121, 122 respectively of said first and second surfaces 141, 142 for engaging and holding by suctioning the same product.

Advantageously, as is clear from said figures 4A to 6D, said rotation means, or respective hinge, 30 are provided for between a first part 123' of said connecting means 123 between said first and second supporting bodies 121, 122, which is integral to, and/or projecting from, said first supporting body 121, and a second part 123" of said connecting means 123 between said first and second supporting bodies 121, 122, which is integral to, and/or projecting from, said second supporting body 121, 122.

In an advantageous manner, as is clear from said figures 4A to 6D, said rotation means, or respective hinge, 30 are adapted to arrange said first 141 and second 142 surfaces for engaging and holding by suctioning the same product on the same plane, in particular a horizontal plane, i.e., in a mutually aligned condition.

As is clear from said figures 4A to 6D, with advantage, said rotation means, or respective hinge, 30 are adapted to arrange said first 141 and second 142 surfaces for engaging and holding by suctioning the same product on planes that are angularly spaced apart from one another, in particular on planes that are angularly spaced apart from one another by 90°.

Advantageously, as is clear from said figures 4A to 6D, said rotation means, or respective hinge, 30 are in a position above said first surface 141 for engaging and holding by suctioning the same product and/or said second surface 142 for engaging and holding by suctioning the same product, in particular in a mutually aligned condition.

As is clear from said figures 4A to 6D, particularly advantageously, said second surface 142 for engaging and holding by suctioning the same product 11, and/or the corresponding supporting body 121, in the position, in particular for engaging the product 11, in which it is angularly rotated, in particular by 90°, or substantially by 90°, extends inferiorly with respect to said first surface 142 for engaging and holding by suctioning the same product 11, and/or with respect to the corresponding supporting body 121, in particular corresponding, or substantially corresponding, to the arrangement of the preferred implementation above.

In this manner, by virtue of the present possibility to rotate, the device can thus be configurated in a completely lifted position, which allows a movement of the device such as to avoid respective products 11 and at a height level that is advantageous or substantially corresponding to that for gripping the respective product 11, as is clear from figures 4A to 4D, i.e., which allows taking flat product or articles, for example cardboard sheets 11' to be used to create stacks of products 11, as is clear from said figures 5A to 5G.

Advantageously, as is clear from said figures 6A to 6D, said first 141 and second 142 surfaces for engaging and holding by suctioning the same product are movable one with respect to the other one with a translating movement, in particular parallel to the other surface 141 for engaging and holding by suctioning the same product; in particular said second surface 142 for engaging and holding by suctioning the same product, or vertically positioned surface, is movable parallel to the first engaging and holding surface 141, or horizontally positioned surface.

As is clear from said figures 6A to 6D, in an advantageous manner, said first and second supporting bodies 121, 122 respectively for said first and second surfaces 141, 142 for engaging and holding by suctioning the same product are movable one with respect to the other with a translating movement, in particular parallel to the surface 141 for engaging and holding by suctioning the same product, of the other supporting body 121. In particular said second supporting body 122 of said second surface 142 for engaging and holding by suctioning the same product, or vertically positioned surface, is movable parallel to the first engaging and holding surface 141, or horizontally positioned surface, i.e., parallel to said first supporting body 121 of said first surface 141 for engaging and holding by suctioning the same product 11.

Particularly advantageously, as is clear from said figures 6A to 6D, means for the actuation of the relative translating movement between said first 141 and second 142 surfaces for engaging and holding by suctioning the same product are provided, i.e., between said first and second supporting bodies 121, 122 respectively for said first and second surfaces 141, 142 for engaging and holding by suctioning the same product.

Particularly advantageously, as is clear from said figures 6A to 6D said first 141 and second 142 surfaces for engaging and holding by suctioning the same product, and/or said first and second supporting bodies 121, 122 respectively for said first and second surfaces 141, 142 for engaging and holding by suctioning the same product, are respectively movable with a translating movement, forwards and backwards, between a respective mutually moved-farther position and a respective moved-closer position, in particular for gripping the product 11.

Advantageously, as is clear from said figures 6A to 6D, said means for the actuation of the relative translating movement between said first 141 and second 142 surfaces for engaging and holding by suctioning the same product, i.e., between said first and second supporting bodies 121, 122 respectively for said first and second surfaces 141, 142 for engaging and holding by suctioning the same product, are adapted to move said connecting means 123 between said first and second supporting bodies 121, 122 respectively for said first and second surfaces 141, 142 for engaging and holding by suctioning the same product, with respect to said first supporting body 121.

In particular, as illustrated in the figures 6A to 6D, said connecting means 123 between said first and second supporting bodies 121, 122 respectively for said first and second surfaces 141, 142 for engaging and holding by suctioning the same product, move longitudinally with respect to said first supporting body 121, in particular entering again and extending into, or with respect, thereto.

For example, this translating movement could be provided by corresponding pneumatic means, in particular a pneumatic cylinder, i.e., of the electromechanic type, which move said connecting means 123 between said first and second supporting bodies 121, 122 respectively for said first and second surfaces 141, 142 for engaging and holding by suctioning the same product.

In this manner, it is possible to hold the product firm with the upper engaging and holding surface 141 and subsequently contact it with the lower or side engaging and holding surface 142. This type of grip is particularly advantageous, for example, when the product to be grasped has a limited weight, as occurs for products or packs in the tissue field. In practice, said upper engaging and holding surface 141 easily engages the product, having the contrast of the opposite lower surface onto which it rests, and it is thus possible to contact the same product laterally by the lower or side engaging and holding surface 142, without the risk to move in an undesired manner the same product.

In practice, as is clear, the technical characteristics illustrated above allow, singularly or in a respective combination to achieve one or more of the following advantageous results:
- it is possible to easily grasp the product, in particular without providing excessive stresses to the same product, especially to the peripheral surface of the same product, i.e., to the film, or sheet, of the package wrapping respective articles, for example to the film, or sheet, which wraps corresponding toilet paper rolls;
- it is possible to operate in a delicate manner, i.e., without creating excessive stress peaks at the surface of the product to be grasped produced, and the product can thus be taken without damaging the outer envelope, for example of plastic material, which wraps the respective articles, for example in the form of toilet paper rolls wrapped in a respective packaging plastic film;
- it is possible to exert a greater holding action upon the less-stressed side surface of the product;
- it is possible to exert a movement of the device such as to avoid respective products and at a height level substantially corresponding to the grasping level of the respective product;
- it is possible to take flat products or articles, for example cardboard sheets to be used to create stacks of products;
- it is possible to un movement of the device such as to avoid respective products and at a height level that is advantageous or substantially corresponding to the grasping level of the respective product;
- it is possible to take flat products or articles, for example cardboard sheets to be used to create stacks of products;
- it is further possible to easily grasp products that have a limited weight, as occurs for the products or packs of the tissue field.

## Claims

1. A device (10) for gripping or grasping products, said products being in particular in the form of packages, in a preferred manner defined by a corresponding envelope, for example made of a plastic film, or a paper sheet, or other, or made of cardboard, which wraps or contains one or more articles; in particular said articles being articles of the so-called Tissue field and preferably being made of paper material or other material, such as woven fabric or non-woven fabric, and preferentially being in the form of rolls, in particular rolls of toilet paper, of kitchen paper or for another use, or rolls for the treatment of food products, such as rolls of aluminium foil, plastic film, wax paper film, and the like, i.e., said articles being in the form of packaging, in particular packs, packets or other containers, in particular for napkins, handkerchiefs, small towels for hands and face, hand towels, bed sheets, sanitary napkins for personal care; the device comprising support means (12) for means (14) for engaging and holding by suctioning the respective product and being **characterized in that** said means (14) for engaging and holding by suctioning the respective product define a first (141) and a second (142) surfaces for engaging and holding by suctioning the same product angularly spaced apart by an angle equal to, or substantially equal to, 90°, and **in that** at the respective surface (141, 142) for engaging and holding by suctioning the same product, corresponding means (18) are provided for the passage of said suctioning flow.

2. The device according to claim 1, **characterized in that** said first and second surfaces (141, 142) for engaging and holding by suctioning the same product are adapted to engage respective faces of the product to be grasped, in particular angularly spaced apart faces, and preferably mutually adjacent, of said product, and preferably faces of said product that are angularly spaced apart by an angle equal to, or substantially equal to, 90°.

3. The device according to any of the preceding claims, **characterized in that** said first surface (141) for engaging and holding by suctioning the same product is adapted to engage the upper surface of the product; and in particular **in that** said first surface (141) for engaging and holding by suctioning the same product is adapted to engage the upper surface of the product at a central, or substantially central, zone thereof.

4. The device according to any of the preceding claims, **characterized in that** said second surface (142) for engaging and holding by suctioning the same product is adapted to engage a side surface of the same product; and in particular **in that** said second surface (142) for engaging and holding by suctioning the same product is adapted to engage the side surface of the corresponding product in the proximity of the upper surface of the same product

5. The device according to any of the preceding claims, **characterized in that** said first surface (141) for engaging and holding by suctioning the same product has a respective longitudinal extension (11) that is greater than the longitudinal extension (l2) of said second engaging surface (142).

6. The device according to any of the preceding claims, **characterized in that** said first surface (141) for engaging and holding by suctioning the same product has a respective transversal extension (t1) that is lesser than the corresponding transversal extension (t2) of said second engaging surface (142).

7. The device according to any of the preceding claims, **characterized in that** said supporting means (12) define corresponding suctioning chamber means (16) upstream of said first and second surfaces (141, 142) for engaging and holding by suctioning the same product; and in particular **in that** said suctioning chamber means (16) comprise corresponding first and second suctioning chambers (161, 162) respectively upstream of said first and second surfaces (141, 142) for engaging and holding by suctioning the same product.

8. The device according to any of the preceding claims, **characterized in that** said supporting means (12) of the device (10) comprise a first and a second supporting bodies (121, 122) respectively for said first and second surfaces (141, 142) for engaging and holding by suctioning the same product; and in particular **in that** said first and second bodies (121, 122) respectively for supporting said first and second surfaces (141, 142) for engaging and holding by suctioning the same product define a respective suctioning chamber (161 or 162) upstream of the respective surface (141, 142) for engaging and holding by suctioning the same product (141, 142).

9. The device according to any of the preceding claims, **characterized in that** said means (18) for the passage of said suctioning flow comprise, in particular on the first supporting body (121), a respective large suctioning opening (180), i.e. a first and a second suctioning openings (180', 180'), preferably longitudinal, mutually aligned; and in particular **in that**, at a respective opening, a corresponding grid (181), in particular a metal grid, is provided for the passage of a corresponding suctioning air.

10. The device according to any of the preceding claims, **characterized in that** the respective product engaging and holding surface, in particular said first surface (141) for engaging and holding the product, is defined by a corresponding annular lip (141), in particular having an elongated configuration, preferably defined by a corresponding body (13) of elastic material provided at the front face of the corresponding, or first, supporting body (121) and defining the respective suctioning opening (180); especially said annular body (13) being secured to the front face of said corresponding, or first, supporting body (121); and in particular **in that** said body (13) of elastic material at the front face of the corresponding, or first, supporting body (121) is adapted to hold said grid (181) to the same supporting body (121), in particular clamping the edges of the same grid (181) between the rear surface of the same body of elastic material (13) and a corresponding front surface of the corresponding, or first, supporting body (121).

11. The device according to any of the preceding claims, **characterized in that** the respective surface for engaging and holding by suctioning the same product, in particular said second surface (142) for engaging and holding by suctioning the same product is defined by the front surface of a pad (182), preferably made of elastic material, at the front face of the corresponding, or second, supporting body (122).

12. The device according to any of the preceding claims 9 to 11, **characterized in that** said means (18) for the passage of said suctioning flow comprise, in particular on the second supporting body (122), a plurality of passages (183), in particular evenly distributed, for a corresponding suctioning flow, in particular provided at the outer surface of a pad (182), preferably made of elastic material, in particular said pad (182) defining said surface (142) for engaging and holding by suctioning a corresponding face, in particular the side face, of the product, i.e., the second surface (142) for engaging and holding by suctioning provided on the second supporting body (122) of the same device (10).

13. The device according to any of the preceding claims, **characterized in that** said means (14) for engaging by suctioning the respective product, i.e., the respective surface (141, 142) for engaging and holding by suctioning the same product, have, or has, means (20) for sealing the contact with the opposite face of the product to be grasped; and in particular **in that** said means (20) for sealing the contact with the opposite surface of the product comprise an annular or shaped lip (141, 141'), in particular having an elongated configuration, preferably defined by a corresponding body (13) of elastic material defining the respective product engaging and holding surface, in particular said first surface (141) for engaging and holding the product.

14. The device according to claim 13, **characterized in that** said means (20) for sealing the contact with the opposite surface of the product comprise a peripheral or shaped portion (184), of a pad (182), preferably of elastic material, defining respective surface for engaging and holding by suctioning the same product, in particular said second surface (142) for engaging and holding by suctioning thereof.

15. The device according to any of the preceding claims, **characterized in that** said supporting means (12) comprise corresponding means (20) for the connection to means for generating a suctioning flow, in particular corresponding conduits of the suctioning circuit.

## Patentansprüche

1. Vorrichtung (10) zum Angreifen und Halten von Produkten, wobei die Produkte insbesondere in Form von Paketen vorliegen, in bevorzugter Weise definiert durch eine Hülle, beispielsweise aus einer Folie aus Kunststoffmaterial oder einem Blatt Papier oder anderem oder in Karton, der einen oder mehrere Artikel umschließt oder enthält, wobei die Artikel insbesondere Artikel einer sogenannten gewebten Art sind und vorzugsweise aus einem Papier oder einem anderen Material wie einem gewebten Produkt oder einem Vliesprodukt hergestellt sind, und vorzugsweise in der Form von Rollen, insbesondere Toilettenpapierrollen, Küchenrollen oder Rollen für andere Verwendungszwecke, oder Rollen zur Behandlung von Lebensmitteln wie Rollen aus Aluminiumfolien, Kunststofffolien, Wachspapierfolien und dergleichen, also Waren in der Verpackungsformen, insbesondere Pakete, Päckchen oder sonstige Behältnisse, insbesondere für Windeln, Taschentücher, Hand- und Gesichtstücher, Handwischtücher, Bettlaken, Hygienewindeln für die Körperpflege; wobei die Vorrichtung Stützmittel (12) für Mittel (14) zum Angreifen und Halten des jeweiligen Produkts durch Ansaugen umfasst, und ist **dadurch gekennzeichnet, dass** die Mittel (14) zum Angreifen und Halten des jeweiligen Produkts durch Saugen eine erste (141) und eine zweite Oberfläche (142) definieren, die zum Angreifen und Halten des gleichen, im Winkel beabstandeten Produkts durch Ansaugen entsprechend einem Winkel gleich oder im Wesentlichen gleich 90° bestimmt sind, und wobei die entsprechende Oberfläche (141, 142) zum Angreifen und Halten des gleichen Produkts durch Ansaugen Mittel (18) zur Durchleitung des Ansaugstroms vorsieht.

2. Vorrichtung nach Anspruch 1, **dadurch gekennzeichnet, dass** die ersten und zweiten Oberflächen (141, 142) zum Angreifen und Halten desselben Produkts durch Ansaugen dazu geeignet sind, mit jeweiligen Oberflächen des anzugreifenden Produkts in Eingriff zu kommen, insbesondere mit winklig zueinander beanstandeten und vorzugsweise einander benachbarten Oberflächen des Produkts und vorzugsweise mit Oberflächen des Produkts, die einen Winkelabstand von mindestens 90° aufweisen.

3. Vorrichtung nach einem der vorangehenden Ansprüche, **dadurch gekennzeichnet, dass** die erste Oberfläche (141) zum Angreifen und Halten durch Ansaugen desselben Produkts in der Lage ist, sich mit der oberen Fläche des Produkts anzukoppeln, und insbesondere dadurch, dass die erste Fläche (141) zum Angreifen und Halten durch Ansaugen desselben Produkts, dazu ausgelegt ist, die obere Fläche des Produkts in einem zentralen oder im Wesentlichen zentralen Bereich davon in Eingriff zu bringen.

4. Vorrichtung nach einem der vorangehenden Ansprüche, **dadurch gekennzeichnet, dass** die zweite Oberfläche (142) zum Angreifen und Halten durch Ansaugen desselben Produkts in der Lage ist, sich mit der seitlichen Fläche desselben Produkts anzugreifen, und insbesondere dadurch, dass die zweite Fläche (142) zum Angreifen und Halten durch Ansaugen desselben Produkts, in der Lage ist, die seitliche Fläche des entsprechenden Produkts in der Nähe der oberen Fläche desselben Produkts, in Eingriff zu bringen.

5. Vorrichtung nach einem der vorhergehenden Ansprüche, **dadurch gekennzeichnet, dass** die erste Oberfläche (141) zum Angreifen und Halten durch Ansaugen desselben Produkts eine jeweilige Längserstreckung (I1) aufweist, die größer ist als die Längserstreckung (12) der zweiten Angreiffläche (142).

6. Vorrichtung nach einem der vorhergehenden Ansprüche, **dadurch gekennzeichnet, dass** die erste Oberfläche (141) zum Angreifen und Haltern durch Ansaugen desselben Produkts eine jeweilige Quererstreckung (t1) aufweist, die kleiner ist als die entsprechende Quererstreckung (t2) der zweiten Angreiffläche (142).

7. Vorrichtung nach einem der vorhergehenden Ansprüche, **dadurch gekennzeichnet, dass** die Stützmittel (12) entsprechende Mittel mit Saugkammern (16) definieren, die stromaufwärts der ersten und zweiten Oberfläche (141, 142) zum Angreifen und Halten durch Ansaugen desselben Produkts angeordnet sind, und insbesondere dadurch, dass die Mittel mit Saugkammern (16) entsprechende erste und zweite Saugkammern (161, 162) umfassen, die stromaufwärts der ersten und zweiten Oberflächen (141, 142) zum Angreifen und Halten durch Ansaugen desselben Produkts entsprechend angeordnet sind.

8. Vorrichtung nach einem der vorhergehenden Ansprüche, **dadurch gekennzeichnet, dass** die Stützmittel (12) der Vorrichtung (10) einen ersten und einen zweiten Stützkörper (121, 122) jeweils für die erste und zweite Oberfläche (141, 142) zum Angreifen und Halten durch Ansaugen desselben Produkts, umfassen, und insbesondere dadurch, dass die ersten und zweiten Körper (121, 122) jeweils zum Tragen der ersten und zweiten Oberflächen (141, 142) zum Angreifen und Halten durch Ansaugen desselben Produkts eine jeweilige Saugkammer (161 oder 162) stromaufwärts der jeweiligen Oberfläche (141, 142) zum Angreifen und Halten durch Ansaugen desselben Produkts (141, 142), definieren.

9. Vorrichtung nach einem der vorhergehenden Ansprüche, **dadurch gekennzeichnet, dass** die Mittel (18) zum Durchlass des Saugstroms, insbesondere am ersten Tragkörper (121), jeweils eine große Saugöffnung (180), d.h. eine erste und eine zweite Saugöffnung (180', 180'), aufweisen, die vorzugsweise in Längsrichtung zueinander ausgerichtet sind, und insbesondere dadurch, dass an jeder Öffnung ein entsprechendes Gitter (181), insbesondere ein Metallgitter, für den Durchlass einer entsprechenden Ansaugluft, angeordnet ist.

10. Vorrichtung nach einem der vorhergehenden Ansprüche, **dadurch gekennzeichnet, dass** die jeweilige Oberfläche zum Angreifen und Halten des Produkts, insbesondere die erste Oberfläche (141) zum Angreifen und Halten des Produkts, durch eine entsprechende Ringlippe (141) definiert ist, die insbesondere eine längliche Gestalt aufweist, die vorzugsweise durch einen entsprechenden Körper (13) aus einem elastischen Material definiert ist, der auf der Vorderfläche des entsprechenden bzw. ersten Stützkörpers (121) geformt ist und die jeweilige Saugöffnung (180) definiert, wobei insbesondere der ringförmige Körper (13) an der Vorderfläche des entsprechenden bzw. ersten Stützkörpers (121) befestigt ist, und insbesondere dadurch, dass der Körper (13) aus einem elastischen Material an der Vorderfläche des entsprechenden bzw. ersten Stützkörpers (121) dazu geeignet, das Gitter (181) an demselben Stützkörper (121) zu befestigen, insbesondere durch Blockieren der Kanten desselben Gitters (181) zwischen der Rückseite desselben Körpers aus elastischem Material (13) und einer entsprechenden Vorderfläche des entsprechenden bzw. ersten Stützkörpers (121).

11. Vorrichtung nach einem der vorhergehenden Ansprüche, **dadurch gekennzeichnet, dass** die jeweilige Oberfläche zum Angreifen und Halten durch Ansaugen desselben Produkts, insbesondere die zweite Oberfläche (142) zum Angreifen und Halten durch Ansaugen desselben Produkts, von der vorderen Oberfläche eines Polsters (182), vorzugsweise aus elastischem Material, auf der Vorderseite des entsprechenden oder zweiten Stützkörpers (122), definiert ist.

12. Vorrichtung nach einem der vorhergehenden Ansprüche 9 bis 11, **dadurch gekennzeichnet, dass** die Mittel (18) zum Durchlass des Saugstroms, insbesondere am zweiten Stützkörper (122) mehrere Durchlässe (183) umfassen, die insbesondere gleichmäßig verteilt für einen entsprechenden Saugstrom insbesondere an der Außenfläche eines Polsters (182) vorgesehen sind, das vorzugsweise aus einem elastischen Material besteht, wobei insbesondere das Polster (182) die Oberfläche (142) zum Angreifen und Halten durch Ansaugen einer entsprechenden Oberfläche, insbesondere der seitlichen Oberfläche des Produkts, d. h. der zweiten Oberfläche (142) zum Angreifen und Halten durch Ansaugen, die am zweiten Stützkörper (122) derselben Vorrichtung (10) ausgebildet ist.

13. Vorrichtung nach einem der vorhergehenden Ansprüche, **dadurch gekennzeichnet, dass** die Mittel (14) zum Angreifen durch Ansaugen des jeweiligen Produkts, d.h. die jeweilige Oberfläche (141, 142) zum Angreifen und Halten durch Ansaugen desselben Produkts, Mittel (20) zum Abdichten des Kontakts mit der gegenüberliegenden Oberfläche des anzugreifenden Produkts, aufweisen, und insbesondere dadurch, dass die Mittel (20) zum Abdichten des Kontakts mit der gegenüberliegenden Oberfläche des Produkts insbesondere eine ringförmige oder profilierte Lippe (141, 141') umfassen, die eine längliche Gestalt aufweist und vorzugsweise durch einen entsprechenden Körper (13) aus elastischem Material definiert ist, der die entsprechende Oberfläche für Angreifen und Halten des Produkts, insbesondere die erste Oberfläche (141) zum Angreifen und Halten des Produkts, definiert.

14. Vorrichtung nach Anspruch 13, **dadurch gekennzeichnet, dass** die Mittel (20) zum Abdichten des Kontakts mit der gegenüberliegenden Oberfläche des Produkts einen peripheren oder profilierten Teil (184) eines Polsters (182) umfassen, das vorzugsweise aus einem elastischem Material besteht, das eine jeweilige Oberfläche zum Angreifen oder Halten durch Ansaugen desselben Produktes, insbesondere die zweite Fläche (142) zum Angreifen und Halten durch Ansaugen desselben, umfasst.

15. Vorrichtung nach einem der vorhergehenden Ansprüche, **dadurch gekennzeichnet, dass** die Stützmittel (12) entsprechende Mittel (20) zum Anschluss an Mittel zur Erzeugung eines Saugstroms, insbesondere entsprechende Kanäle des Saugkreislaufs, umfassen.

## Revendications

1. Dispositif (10) pour prendre ou saisir des produits, les produits se présentant notamment sous forme de paquets, de manière préférée définis par une enveloppe correspondante, réalisée par exemple à partir d'un film en matière plastique ou d'une feuille de papier ou autre ou en carton, qui renferme ou contient un ou plusieurs articles, en particulier les articles étant des articles de type dit tissé et étant de préférence constitués d'un matériau en papier ou d'un autre matériau tel qu'un produit tissé ou un produit non tissé, et de préférence dans la forme de rouleaux de papier, en particulier de rouleaux de papier hygiénique, de papier essuie-tout ou pour d'autres usages, ou de rouleaux pour le traitement de produits alimentaires tels que des rouleaux de papier d'aluminium, de films plastiques, de films de papier paraffiné et similaires, c'est-à-dire des marchandises sous forme d'emballage, en particulier paquets, sachets ou autres contenants, en particulier pour couches, mouchoirs, lingettes pour les mains et le visage, lingettes pour les mains, draps de lit, couches hygiéniques pour les soins personnels; le dispositif comprenant des moyens de support (12) pour des moyens (14) pour engager et maintenir par aspiration le produit respectif, et **caractérisé en ce que** les moyens (14) pour engager et maintenir par aspiration le produit respectif définissent une première (141) et une deuxième (142) surface pour engager et maintenir par aspiration le même produit angulairement espacé selon un angle égal ou sensiblement égal à 90°, et celle sur la surface respective (141, 142) pour engager et maintenir par aspiration le même produit, et des moyens correspondants (18) étant prévus pour le passage du flux d'aspiration.

2. Dispositif selon la revendication 1, **caractérisé en ce que** les première et deuxième surfaces (141, 142) d'engagement et de fixation d'un même produit par aspiration sont aptes à coopérer avec des surfaces respectives du produit à saisir, notamment à une distance angulaire les unes des autres, et de préférence mutuellement adjacentes, des surfaces du produit, et de préférence avec des surfaces du produit qui sont angulairement espacées d'un angle égal ou sensiblement égal à 90°.

3. Dispositif selon l'une des revendications précédentes, **caractérisé en ce que** la première surface (141) pour l'engagement et la fixation par aspiration d'un même produit est apte à s'engager sur la surface supérieure du produit, et notamment **en ce que** la première surface (141) pour l'engagement et la fixation par aspiration d'un même produit, est ape à s'engager dans la surface supérieure du produit dans une zone centrale ou sensiblement centrale de celui-ci.

4. Dispositif selon l'une des revendications précédentes, **caractérisé en ce que** la deuxième surface (142) d'engagement et de fixation par aspiration d'un même produit est apte à s'engager dans une surface latérale d'un même produit et notamment **en ce que** la deuxième surface (142) pour l'engagement et la fixation par aspiration du même produit, est apte à s'engager dans la surface latérale du produit correspondant au voisinage de la surface supérieure du même produit.

5. Dispositif selon l'une des revendications précédentes, **caractérisé en ce que** la première surface (141) d'engagement et de fixation d'un même produit a une extension longitudinale respective (II) qui est supérieure à l'extension longitudinale (12) de la deuxième surface d'accouplement (142).

6. Dispositif selon l'une des revendications précédentes, **caractérisé en ce que** la première surface (141) d'engament et de fixation par aspiration d'un même produit présente une extension transversale respective (t1) inférieure à l'extension transversale correspondante (t2) de la deuxième surface d'accouplement (142).

7. Dispositif selon l'une des revendications précédentes, **caractérisé en ce que** les moyens de support (12) définissent des moyens correspondants avec des chambres d'aspiration (16) en amont des première et deuxième surfaces (141, 142) d'engagement et de fixation par aspiration d'un même produit, et notamment que les moyens avec des chambres d'aspiration (16) comportent des première et deuxième chambres d'aspiration correspondantes (161, 162) respectivement plusieurs des première et deuxième surfaces (141, 142) d'engagement et de fixation par aspiration du même produit.

8. Dispositif selon l'une des revendications précédentes, **caractérisé en ce que** les moyens de support (12) du dispositif (10) comprennent un premier et un deuxième corps de support (121, 122) respectivement pour les première et deuxième surfaces (141, 142) d'engagement et de fixation par aspiration d'un même produit, et notamment que les premier et deuxième corps (121, 122) respectivement de support des première et deuxième surfaces (141, 142) d'engagement et de fixation par aspiration du même produit, définissent une chambre d'aspiration respective (161 ou 162) en amont de la surface respective (141, 142) d'engagement et de fixation par aspiration du même produit (141, 142).

9. Dispositif selon l'une des revendications précédentes, **caractérisé en ce que** les moyens (18) de passage du flux d'aspiration comportent, notamment sur le premier corps de support (121), une grande ouverture d'aspiration respective (180), c'est-à-dire une première et une deuxième ouverture d'aspiration (180', 180'), de préférence alignées entre elles dans le sens longitudinal, et notamment qu'une grille correspondante (181) est disposée sur chaque ouverture, notamment une grille métallique, pour le passage d'un air d'aspiration correspondant.

10. Dispositif selon l'une des revendications précédentes, **caractérisé en ce que** la surface respective d'engagement et de fixation d'un produit, en particulier la première surface (141) pour l'engagement et la fixation du produit, est définie par une lèvre annulaire correspondante (141), spécialement prévue avec une configuration allongée, de préférence définie par un corps correspondant (13) d'un matériau élastique formé sur la surface avant du corps de support correspondant, ou premier, (121) et définit l'ouverture d'aspiration respective (180), en particulier le corps annulaire (13) étant fixé à la surface avant du corps de support correspondant, ou premier, (121), et en particulier que le corps (13) en un matériau élastique sur la surface avant du corps de support correspondant, ou premier, (121) est apte à fixer la grille (181) sur un même corps de support (121), notamment en bloquant les bords de la même grille (181) entre la surface arrière d'un même corps en matériau élastique (13) et une surface avant correspondante du corps de support correspondant, ou premier, (121).

11. Dispositif selon l'une des revendications précédentes, **caractérisé en ce que** la surface respective d'engagement et de fixation par aspiration du même produit, en particulier la deuxième surface (142) d'engagement et de fixation par aspiration du même produit, est définie par la surface avant d'un patin (182), de préférence formée à partir d'un matériau élastique, sur la surface avant du corps de support correspondant, ou deuxième, (122).

12. Dispositif selon l'une des revendications précédentes de 9 à 11, **caractérisé en ce que** les moyens (18) pour le passage du premier flux d'aspiration comportent, notamment sur le deuxième corps de support (122), une pluralité de passages (183), notamment uniformément répartis, pour un flux d'aspiration correspondant, notamment formé sur la surface extérieure d'un patin (182), de préférence formé d'un matériau élastique, dans lequel notamment le patin (182) définit la surface (142) d'engagement et de fixation par aspiration d'une surface correspondante, notamment de la surface latérale du produit, c'est-à-dire la deuxième surface (142) d'engagement et de fixation par aspiration, formée sur le deuxième corps de support (122) d'un même dispositif (10).

13. Dispositif selon l'une des revendications précédentes, **caractérisé en ce que** les moyens (14) pour engager et fixer le produit respectif, c'est-à-dire la surface respective (141, 142) d'engagement et de fixation du même produit, comportent des moyens (20) pour sceller le contact avec la surface opposée du produit à saisir, et notamment que les moyens (20) pour sceller le contact avec la surface opposée du produit comprennent une lèvre annulaire ou profilée (141, 141'), notamment pourvue d'une configuration allongée, de préférence définie par un corps correspondant (13) en matériau élastique qui définit la surface respective d'engagement et de fixation du produit, en particulier la première surface (141) d'engagement et de fixation du produit.

14. Dispositif selon la revendication 13, **caractérisé en ce que** les moyens (20) pour seller le contact avec la surface opposée du produit comprennent une partie périphérique ou profilée (184) d'un patin (182), de préférence en matériau élastique, qui définit une surface respective d'engagement et de fixation per aspiration du même produit, en particulier la deuxième surface (142) pour un engagement et une fixation par aspiration de celui-ci.

15. Dispositif selon l'une des revendications précédentes, **caractérisé en ce que** les moyens de support (12) comportent des moyens correspondants (20) de raccordement à des moyens de génération d'un flux d'aspiration, notamment des conduits correspondants du circuit d'aspiration.
